# EUROPEAN PATENT APPLICATION

(11) **EP 4 693 032 A1**
(43) Date of publication of application: **11.02.2026**
(21) Application number: 25194550.7
(22) Date of filing: 07.08.2025
(51) Int. Cl.: G06F 9/4401

(54) **TURNING ON AND OFF ACTUATORS IN A MICROSERVICE BASED SERVICE-ORIENTED ARCHITECTURE FOR ZONAL VEHICLE CONTROL**

(30) Priority: 09.08.2024 KR 20240106895; 07.03.2025 KR 20250029411
(71) Applicant: LG Electronics Inc., Yeongdeungpo-gu Seoul 07336 (KR)
(72) Inventor: JUNG, Junyoung, 07796 Seoul (KR); KIM, Eunjin, 07796 Seoul (KR); LEE, Dongkyu, 07796 Seoul (KR); LEE, Chulhee, 07796 Seoul (KR); PARK, Namyong, 07796 Seoul (KR)
(74) Representative: Vossius & Partner Patentanwälte Rechtsanwälte mbB

(57) **Abstract**

A vehicle control apparatus according to an embodiment of the present disclosure includes: a first signal processing device; a second signal processing device; and a control device including a controller configured to control a plurality of actuators, wherein the second processor is configured to: execute a first service to control the controller to output a turn-on signal or a turn-off signal to at least one of the plurality of actuators; in response to a second service being executed after storing data associated with execution of the second service, which is added or updated in addition to the first service, control the controller to output the turn-on signal or the turn-off signal, or an operation control signal to the actuator; and not transmit the data associated with the execution of the second service to the control device. Accordingly, a new service or an updated service can be efficiently executed.

## Description

The present disclosure relates to a vehicle control apparatus, and more particularly to a vehicle control apparatus capable of efficiently executing a new service or an updated service.

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle can be configured to perform signal processing based on sensor data received from various vehicle internal sensor devices.

Meanwhile, an actuator operates under the control of a controller, but has a drawback in that it is difficult to update services or to add new services, and the like.

It is an objective of the present disclosure to provide a vehicle control apparatus capable of efficiently executing a new service or an updated service.

It is another objective of the present disclosure to provide a vehicle control apparatus capable of efficiently executing a Service-Oriented Architecture (SOA)-based new service or updated service.

In accordance with an aspect of the present disclosure, the above and other objectives can be accomplished by providing a vehicle control apparatus including: a first signal processing device including a first processor and a first memory; a second signal processing device electrically connected to the first signal processing device and including a second processor and a second memory; and a control device including a controller electrically connected to the second signal processing device and configured to control a plurality of actuators, wherein the second processor is configured to: execute a first service to control the controller to output a turn-on signal or a turn-off signal to at least one of the plurality of actuators; in response to a second service being executed after data associated with execution of the second service, which is added or updated in addition to the first service, is stored in the first memory or the second memory, control the controller to output the turn-on signal or the turn-off signal, or an operation control signal to at least one of the plurality of actuators; and not transmit the data associated with the execution of the second service to the control device.

The "turn-on signal" refers to a signal for activating or supplying power to an actuator, and the "turn-off signal" refers to a signal for deactivating or cutting off the power supply to an actuator.

Meanwhile, in response to a condition corresponding to or defined by particular data among the data associated with the execution of the second service being satisfied, the second processor can be configured to execute the second service.

Meanwhile, the operation control signal can include an operation speed control signal, an operation intensity control signal, or an operation temperature control signal.

Meanwhile, the second service can include a microservice.

Meanwhile, the first processor can be configured to execute a third service based on received sensor data and to transmit information associated with the execution of the third service to the second processor, wherein the second processor can be configured to control the controller by executing the second service based on the information associated with the execution of the third service.

Meanwhile, the first processor can be configured to execute a third service based on a received first input signal and sensor data and to transmit information associated with the execution of the third service to the second processor, wherein the second processor can be configured to control the controller by executing the second service based on the information associated with the execution of the third service.

Meanwhile, the sensor data can include at least one of vehicle driving sensor data, occupant status sensor data, and vehicle surrounding sensor data.

Meanwhile, in response to the sensor data satisfying a condition for executing the third service, the first processor can be configured to execute the third service.

Meanwhile, the first processor can be configured to transmit a received first input signal to the second processor, wherein the second processor can be configured to control the controller by executing the first service based on the first input signal.

Meanwhile, the second processor can be configured to control the controller by executing the second service based on the received sensor data.

Meanwhile, the second processor can be configured to control the controller by executing the second service based on the received first input signal and sensor data.

Meanwhile, the sensor data can include at least one of vehicle driving sensor data, occupant status sensor data, and vehicle surrounding sensor data.

Meanwhile, in response to the sensor data satisfying a condition for executing the second service, the second processor can be configured to execute the second service.

Meanwhile, the second processor can be configured to control the controller by executing the first service based on the first input signal.

Meanwhile, the data associated with the execution of the second service can include condition data and action data, wherein at least one of the condition data and the action data can be updatable. The "condition data" refers to data corresponding to or defining one or more conditions for executing one or more subsequent processing or operations, and the "action data" refers to data corresponding to or defining one or more processing or operations to be executed.

Meanwhile, the condition data can include vehicle driving sensor data, occupant status sensor data, and vehicle surrounding sensor data.

Meanwhile, when the second processor executes the second service, the controller can be configured to receive operation status data of the actuators and to change operation status of the actuators based on the operation status data of the actuators.

Meanwhile, the controller can be configured to control turning on or off of the actuators based on the first service, and to change operation speed of the actuators based on the second service.

Meanwhile, the controller can be configured to control the actuators for locking or unlocking a vehicle window based on the first vehicle service executed based on an input signal, and can be configured to control the actuators or windows for any one of window closing speed, window opening control, window closing strength, and automatic window locking based on the second service executed by vehicle internal camera data.

Meanwhile, the controller can be configured to control the actuators for movement of a vehicle seat based on the first vehicle service executed based on an input signal, and can be configured to control the actuators or a seat motor for any one of movement speed, movement control, movement intensity, and automatic movement of the vehicle seat based on the second service executed by vehicle internal camera data.

Meanwhile, the controller can be configured to control the actuators for temperature control in a vehicle based on the first vehicle service executed based on an input signal, and can be configured to control the actuators for any one of temperature control, wind direction control, and fan speed in the vehicle based on the second service executed by vehicle internal camera data.

Meanwhile, the vehicle control apparatus can further include: a third signal processing device electrically connected to the first signal processing device and including a third processor and a third memory; and a second control device including a second controller electrically connected to the third signal processing device and configured to control a plurality of actuators.

Meanwhile, the third processor can be configured to: execute a fourth service to control a second controller to output a second turn-on signal or a second turn-off signal to at least one of the plurality of actuators; in response to a fifth service being executed after data associated with execution of the fifth service, which is added or updated in addition to the fourth service, is stored in the third memory, control the second controller to output the second turn-on signal or the second turn-off signal, or a second operation control signal to at least one of the plurality of actuators; and not transmit the data associated with the execution of the fifth service to the second control device.

Meanwhile, in response to a first device being newly connected to the second signal processing device or the control device, the first processor can be configured to receive data for executing a service corresponding to the first device from an external server or an external electronic device and to execute the service.

The embodiments will be described in detail with reference to the following drawings in which like reference numerals refer to like elements wherein:
FIG. 1 is a diagram illustrating an example of the exterior and interior of a vehicle;
FIG. 2 is a diagram illustrating an example of the architecture of a vehicle control apparatus;
FIG. 3A is a diagram illustrating an example of displays in a vehicle;
FIG. 3B is a diagram illustrating another example of displays in a vehicle;
FIG. 4 is an exemplary internal block diagram of a vehicle control apparatus according to an embodiment of the present disclosure;
FIGS. 5A to 5D are diagrams illustrating various examples of a vehicle control apparatus;
FIG. 6 is an exemplary block diagram of a vehicle control apparatus according to an embodiment of the present disclosure;
FIG. 7A is an exemplary diagram illustrating the operation of a central signal processing device according to an embodiment of the present disclosure;
FIG. 7B is an exemplary diagram illustrating the operation of a zonal signal processing device according to an embodiment of the present disclosure;
FIG. 8 is a diagram illustrating an example of executing a vehicle service in a signal processing device according to an embodiment of the present disclosure;
FIGS. 9 and 10 are diagrams referred to in the description of FIG. 8;
FIG. 11A is an exemplary internal block diagram of a vehicle control apparatus associated with the present disclosure;
FIG. 11B is a diagram referred to in the description of FIG. 11A;
FIG. 12A is an exemplary internal block diagram of a vehicle control apparatus according to an embodiment of the present disclosure;
FIG. 12B is a diagram referred to in the description of FIG. 12A;
FIG. 13A is an exemplary internal block diagram of a vehicle control apparatus according to another embodiment of the present disclosure;
FIGS. 13B and 13C are diagrams referred to in the description of FIG. 13A;
FIG. 14A is an exemplary internal block diagram of a vehicle control apparatus according to yet another embodiment of the present disclosure;
FIGS. 14B to 14D are diagrams referred to in the description of FIG. 14A;
FIG. 15 is an exemplary internal block diagram illustrating a vehicle control apparatus according to yet another embodiment of the present disclosure;
FIG. 16 is a flowchart illustrating the operation of a vehicle control apparatus according to an embodiment of the present disclosure; and
FIGS. 17A to 21B are diagrams referred to in the description of FIG. 16.

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

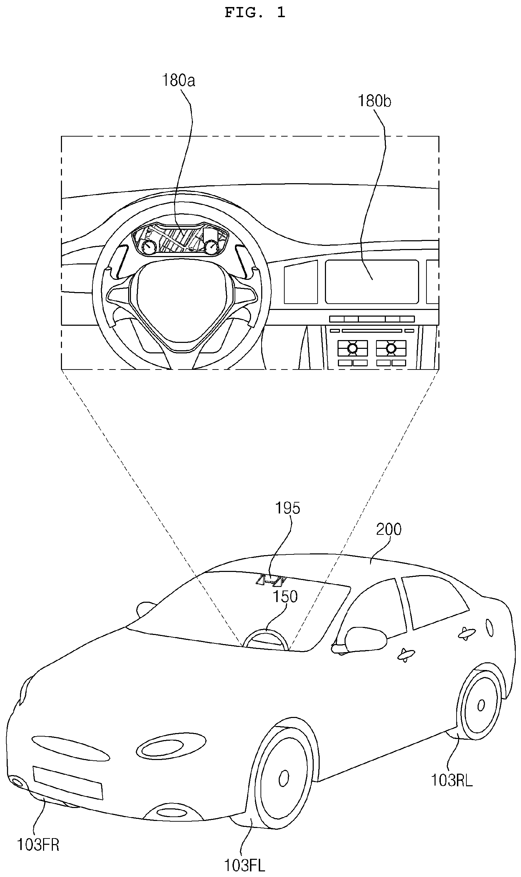

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

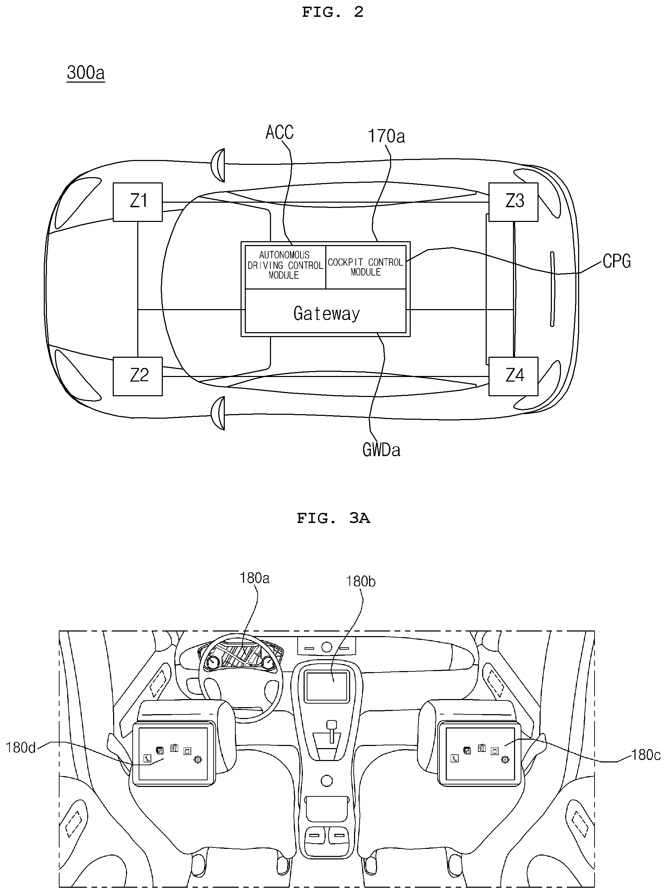

FIG. 2 is a diagram illustrating an example of the architecture of a vehicle control apparatus.

Referring to the figure, an architecture 300a of a vehicle control apparatus can correspond to a zone-based architecture.

Accordingly, vehicle internal sensor devices and processors can be mounted in each of a plurality of zones Z1 to Z4, and a signal processing device 170a including a gateway GWDa can be disposed at the center of the plurality of zones Z1 to Z4.

Meanwhile, the signal processing device 170a can further include an autonomous driving control module ACC, a cockpit control module CPG, etc., in addition to the gateway GWDa.

The gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of displays in a vehicle.

Referring to the figure, a cluster display 180a, an audio video navigation (AVN) display 180b, rear seat entertainment displays 180c and 180d, and a rear-view mirror display (not shown) can be mounted in the vehicle.

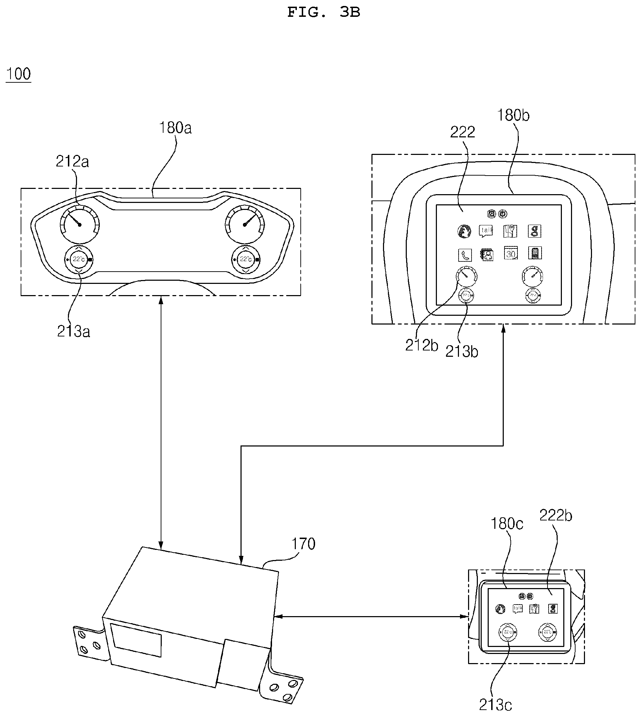

FIG. 3B is a diagram illustrating another example of displays in a vehicle.

A vehicle control apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can be configured to receive and process wheel speed sensor data of the vehicle, and can be configured to transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle control apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

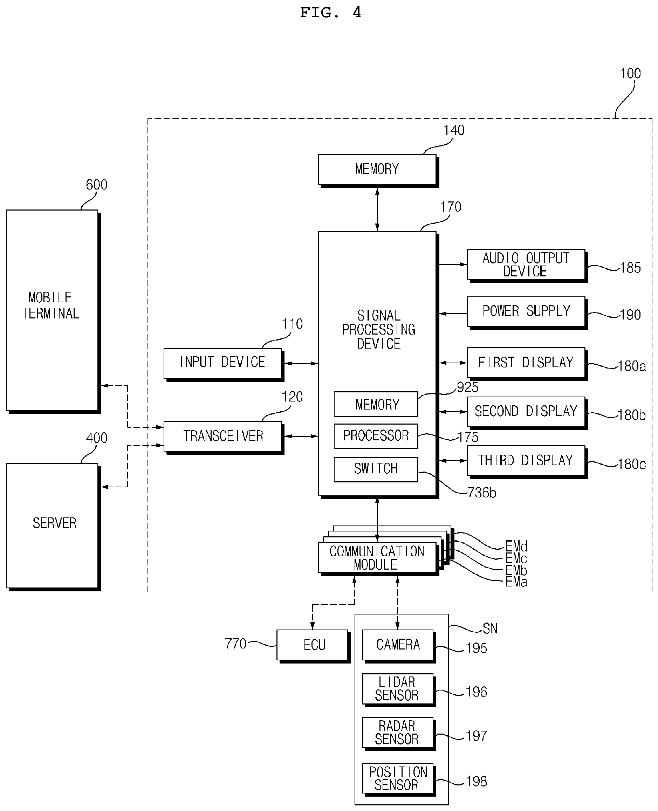

FIG. 4 is an exemplary internal block diagram of a vehicle control apparatus according to an embodiment of the present disclosure.

Referring to FIG. 4, the vehicle control apparatus 100 according to an embodiment of the present disclosure can include an input device 110, a transceiver 120 for communication with an external device, the plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can be configured to perform data communication with the plurality of sensor devices SN or the ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 600 or a server 400.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can be configured to receive weather information and road traffic state information, such as Transport Protocol Experts Group (TPEG) information, from a mobile terminal 600 or a server 400. To this end, the transceiver 120 can include a mobile communication module (not shown).

The plurality of communication modules EM1 to EM4 can be configured to receive sensor data and the like from the electronic control unit (ECU) 770 or the sensor device SN or a zonal signal processing device 170Z, and can be configured to transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can be configured to transmit position information data sensed by the GPS module or the position sensor 198 to the signal processing device 170.

Meanwhile, at least one of the plurality of communication modules EM1 to EM4 can be configured to receive front image data of the vehicle, side-of-vehicle image data, rear image data of the vehicle, and obstacle-around-vehicle distance information from the camera 195, the lidar sensor 196, or the radar sensor 197, and can be configured to transmit the received information to the signal processing device 170.

The memory 140 can be configured to store various data necessary for overall operation of the vehicle control apparatus 100, such as programs for processing or control of the signal processing device 170.

For example, the memory 140 can be configured to store data associated with the hypervisor and first to third virtual machines executed by the hypervisor in the processor 175.

The audio output device 185 can convert an electrical signal from the signal processing device 170 into an audio signal, and can be configured to output the audio signal. To this end, the audio output device 185 can include a speaker.

The power supply 190 can supply power necessary to operate components under control of the signal processing device 170. In particular, the power supply 190 can be configured to receive power from a battery in the vehicle.

The signal processing device 170 can be configured to control the overall operation of each device in the vehicle control apparatus 100.

For example, the signal processing device 170 can include a processor 175 configured to perform signal processing for the vehicle displays 180a and 180b.

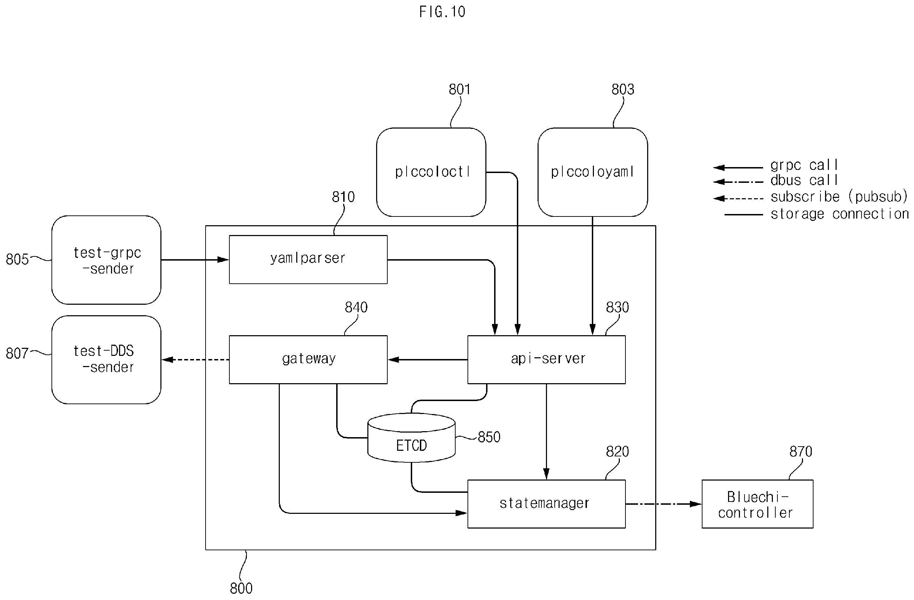

The processor 175 can be configured to execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can be configured to receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can be configured to transmit the processed data to the second and third virtual machines (not shown).

Accordingly, only the first virtual machine (not shown), among the first to third virtual machines (not shown), can be configured to receive sensor data from the plurality of sensor devices, communication data, or external input data, and can be configured to perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

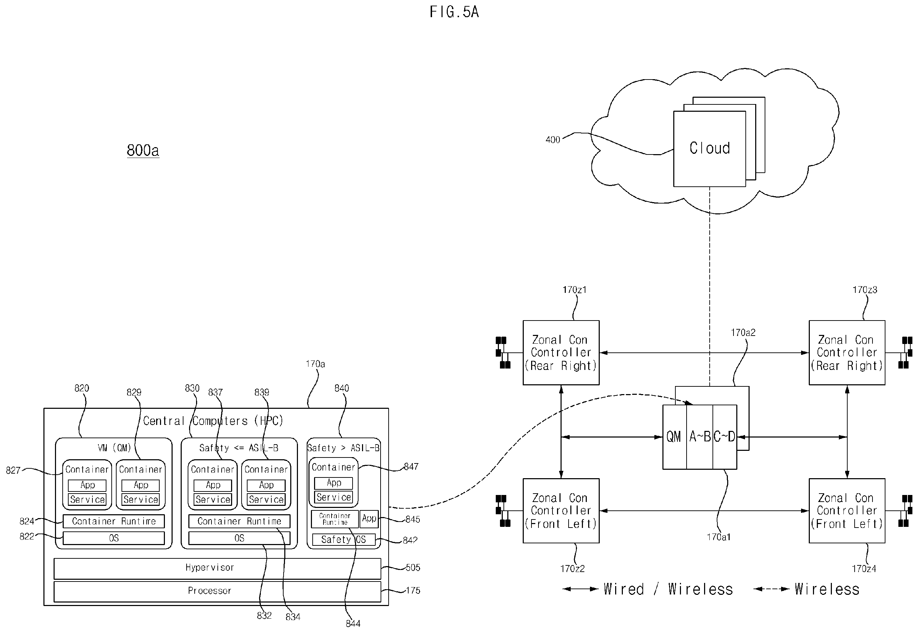

Meanwhile, the signal processing device 170 in the display device 100 of FIG. 4 can be the same as signal processing devices 170, 170a1, and 170a2 of a vehicle control apparatus of FIG. 5A and subsequent figures.

FIGS. 5A to 5D are diagrams illustrating various examples of a vehicle control apparatus.

FIG. 5A is a diagram illustrating an example of a vehicle control apparatus according to an embodiment of the present disclosure.

Referring to FIG. 5A, a vehicle control apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can be configured to receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data, and external vehicle lidar data.

Meanwhile, the camera data can include external vehicle camera data and vehicle internal camera data.

Meanwhile, the signal processing devices 170a1 and 170a2 can be configured to execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can be configured to execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can be configured to execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can be configured to execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

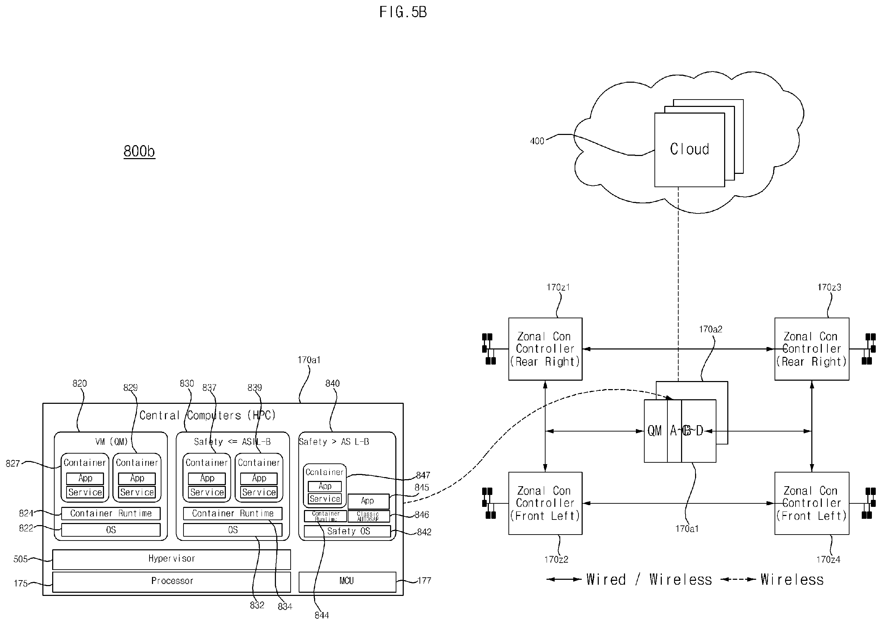

Meanwhile, unlike the drawing, the third virtual machine 840 can also be executed by a separate core, rather than by the processor 175, which will be described below with reference to FIG. 5B.

FIG. 5B is a diagram illustrating another example of a vehicle control apparatus according to an embodiment of the present disclosure.

Referring to FIG. 5B, a vehicle control apparatus 800b according to an embodiment of the present disclosure includes the signal processing devices 170a1 and 170a2 and a plurality of zonal signal processing devices 170Z1 to 170Z4.

The vehicle control apparatus 800b of FIG. 5B is similar to the vehicle control apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can be configured to execute the operating system 822, the container runtime 824 on the operating system 822, and the containers 827 and 829 on the container runtime 824.

The second virtual machine 820 can be configured to execute the operating system 832, the container runtime 834 on the operating system 832, and the containers 837 and 839 on the container runtime 834.

Meanwhile, the second processor 177 in the signal processing device 170a1 can be configured to execute the third virtual machine 840.

The third virtual machine 840 can be configured to execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

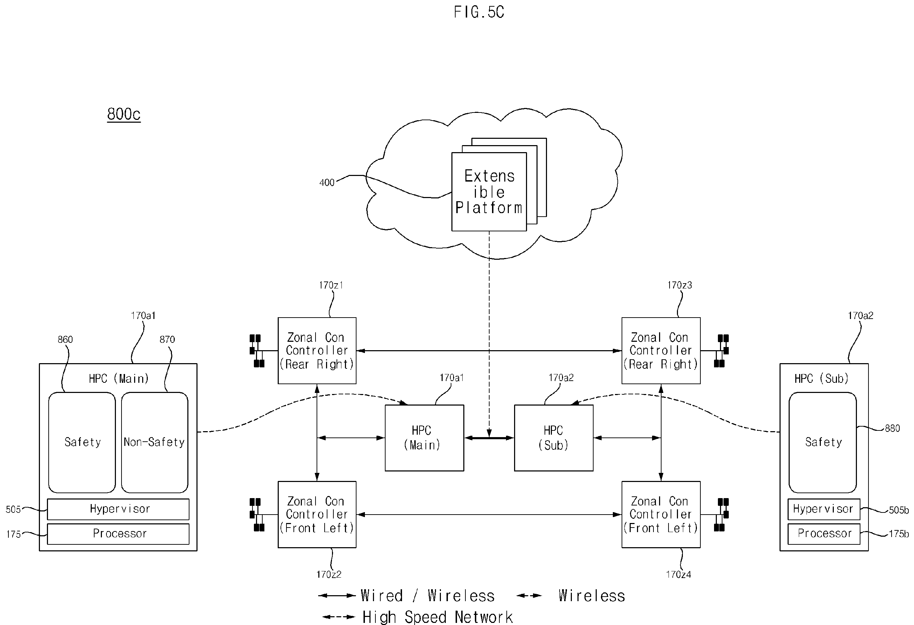

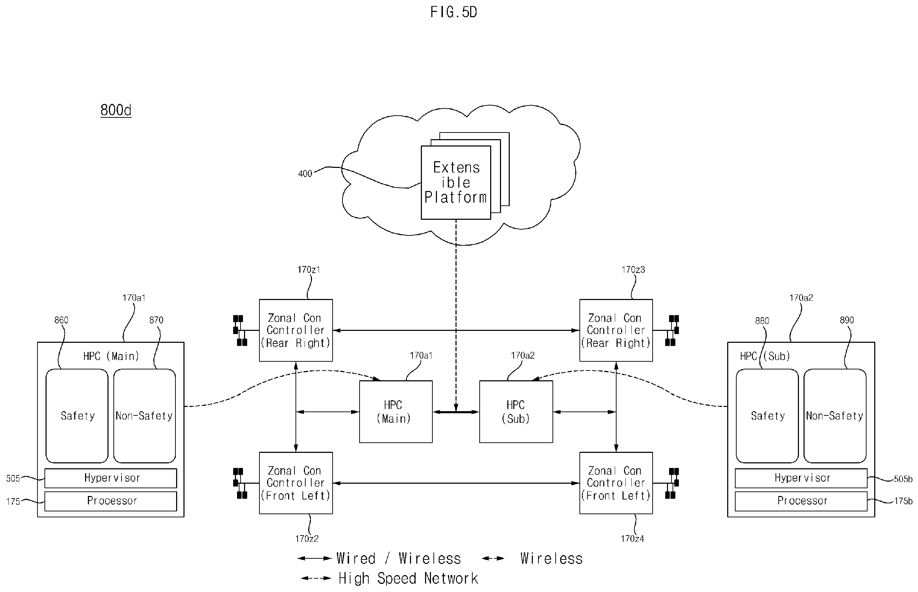

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle control apparatus according to an embodiment of the present disclosure.

Referring to FIG. 5C, a vehicle control apparatus 800c according to an embodiment of the present disclosure includes the signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can be configured to receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can be configured to execute the hypervisor 505, and can be configured to execute each of a safety virtual machine 860 and a non safety virtual machine 870 on the hypervisor 505.

Meanwhile, the processor 175b in the second signal processing device 170a2 of the signal processing devices 170a1 and 170a2 can be configured to execute the hypervisor 505b, and can be configured to execute only a safety virtual machine 880 on the hypervisor 505.

In the method, safety and non safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle control apparatus according to an embodiment of the present disclosure.

Referring to FIG. 5D, a vehicle control apparatus 800d according to an embodiment of the present disclosure includes the signal processing devices 170a1 and 170a2 and a plurality of zonal signal processing devices 170Z1 to 170Z4.

The vehicle control apparatus 800d of FIG. 5D is similar to the vehicle control apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can be configured to execute the hypervisor 505b, and can be configured to execute each of a safety virtual machine 880 and a non safety virtual machine 890 on the hypervisor 505.

That is, unlike FIG. 5C, there is a difference in that the processor 175b in the second signal processing device 170a2 further executes the non safety virtual machine 890.

In the method, safety and non safety virtual machines can be processed separately by the first signal processing device 170a1 and the second signal processing device 170a2, thereby improving stability and processing speed.

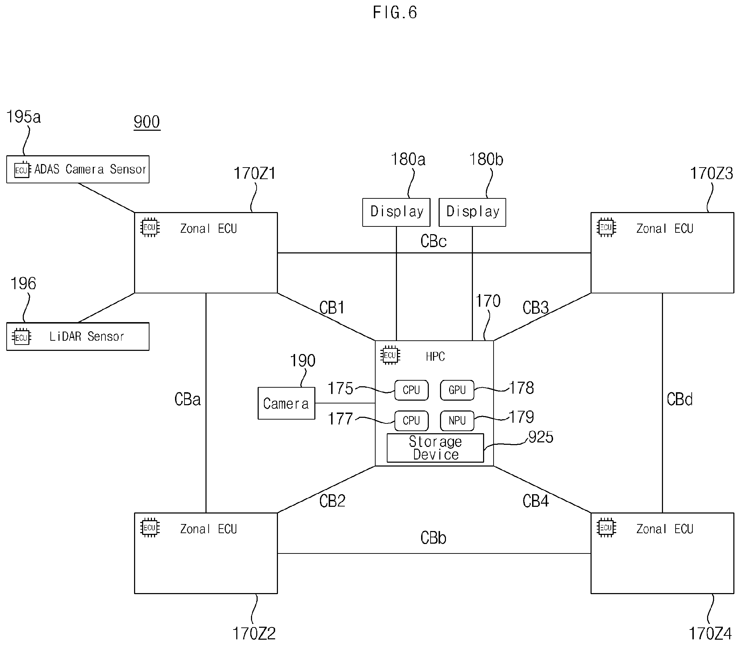

FIG. 6 is an exemplary block diagram of a vehicle control apparatus according to an embodiment of the present disclosure.

Referring to FIG. 6, a vehicle control apparatus 900 according to an embodiment of the present disclosure includes the signal processing device 170 and at least one display.

In the drawing, the cluster display 180a and the AVN display 180b are illustrated as at least one display.

Meanwhile, the vehicle control apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can be configured to perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle control apparatus 900 according to an embodiment of the present disclosure is peripheral component interconnect express communication in order to provide high band and low delay communication.

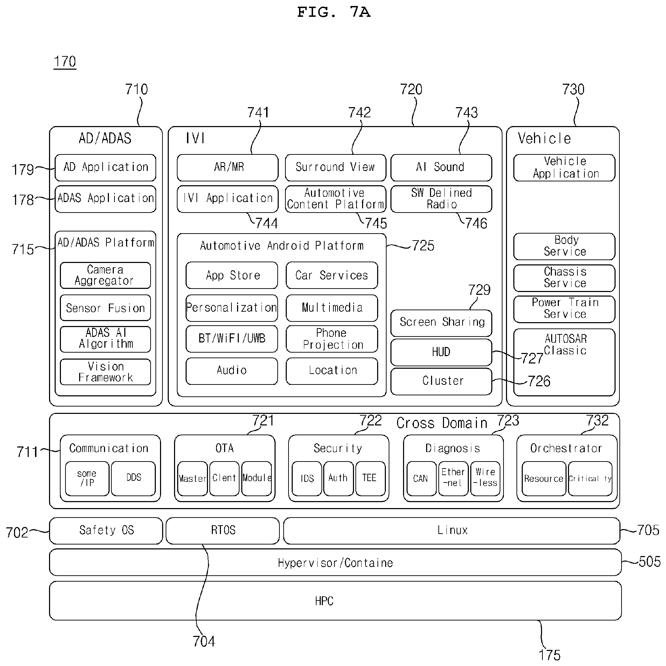

FIG. 7A is an exemplary diagram illustrating the operation of a central signal processing device according to an embodiment of the present disclosure.

Referring to FIG. 7A, a central signal processing device 170 according to an embodiment of the present disclosure includes a processor 175.

The processor 175 in the central signal processing device 170 can be configured to execute a hypervisor 505 or a container.

Meanwhile, the processor 175 can be configured to execute a software-defined vehicle (SDV) base domain on the hypervisor 505 or the container.

For example, the processor 175 can be configured to execute a communication domain 711, an OTA domain 721, a security domain 722, a diagnosis domain 723, and an Orchestrator domain 732 on the hypervisor 505 or the container.

The communication domain 711 is a domain for internal communication and can include a Scalable service-Oriented MiddlewarE over IP (SOME/IP) domain, DDS domain, and the like.

The OTA domain 721 is an update domain based on data received from the server 400, and can include a master domain, a client domain, a module domain, and the like.

The security domain 722 can include an IDS domain, an AUTH domain, a TEE domain, and the like.

The diagnosis domain 723 can include a CAN domain, an Ethernet domain, a Wireless domain, and the like.

The Orchestrator domain 732 can include a resource domain, a criticality domain, and the like.

Meanwhile, the processor 175 can be configured to execute an SDV base platform on each domain.

For example, the processor 175 can be configured to execute the SDV base autonomous driving (AD) or Advanced Driver Assistance System (ADAS) platform 715 on the communication domain 711.

Meanwhile, the AD or ADAS platform 715 can include a platform, such as camera aggregator, sensor fusion, ADAS AI algorithm, vision framework, and the like.

For example, the processor 175 can be configured to execute an SDV base vehicle platform 725 on the OTA domain 721 and the security domain 722.

Meanwhile, the vehicle platform 725 can include application store, car service, personalization multimedia, BT/WiFi/UWB, phone projection, audio, location platform, and the like.

For example, the processor 175 can be configured to execute a platform, such as SDV base screen sharing 729, HUD 727, cluster 726, etc., on the diagnosis domain 723.

Meanwhile, the processor 175 can be configured to execute a platform, such as SDV base body service, chassis service, powertrain service, AUTOSAR classic, etc., on the orchestrator domain 723.

Meanwhile, the processor 175 can be configured to execute SDV experience or application and the like on the SDV Base.

For example, the processor 175 can be configured to execute an AD application 179 or an ADAS application 178 on the AD or ADAS platform 715.

Meanwhile, the processor 175 can be configured to execute an AR/MR application 741, a surround view application 742, an AI sound application 743, an IVI application 744, an automotive content platform application 745, a SW-defined radio application 746, and the like on the vehicle platform 725, screen sharing 729, HUD 727 or cluster 726.

Meanwhile, the processor 175 can be configured to execute a vehicle application 178 and the like on the platform, such as the body service, chassis service, powertrain service, AUTOSAR classic, and the like.

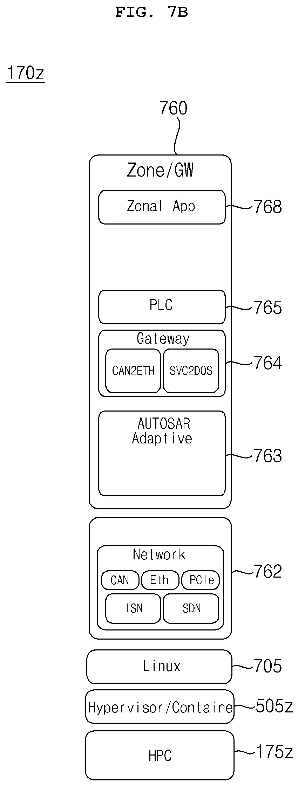

FIG. 7B is an exemplary diagram illustrating the operation of a zonal signal processing device according to an embodiment of the present disclosure.

Referring to FIG. 7B, a zonal signal processing device 170z according to an embodiment of the present disclosure includes a processor 175z.

The processor 175z in the zonal signal processing device 170z can be configured to execute a hypervisor 505z or a container.

Meanwhile, the processor 175z can be configured to execute an operating system 705 on the hypervisor 505z or the container.

Meanwhile, the processor 175z can be configured to execute a network domain 762 on the operating system 705.

Meanwhile, the network domain 762 can include CAN, Ethernet, PCIe, ISN, or SDN domain, and the like.

Meanwhile, the processor 175z can be configured to execute a platform, such as AUTOSAR Adaptive 763, gateway 764, PLC 765, etc., on the network domain 762.

Meanwhile, the processor 175z can be configured to execute a zonal application 768 and the like on the platform, such as the AUTOSAR Adaptive 763, the gateway 764, the PLC 765, and the like.

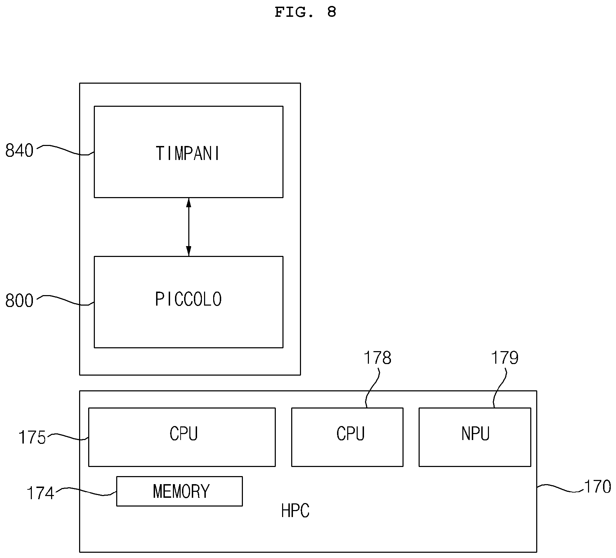

FIG. 8 is a diagram illustrating an example of executing a vehicle service in a signal processing device according to an embodiment of the present disclosure.

Referring to FIG. 8, the signal processing device 170 according to an embodiment of the present disclosure includes a processor 175 and a memory 174.

Meanwhile, the signal processing device 170 according to an embodiment of the present disclosure can further include a second processor 178 and a neural processor 179.

Meanwhile, the processor 175 according to an embodiment of the present disclosure can be configured to execute a service agent 800 for executing a vehicle service. In this case, the service agent 800 can be referred to as PICCOLO.

For example, the service agent 800 can be configured to receive execution related data for executing a vehicle service based on SDV, and can be configured to execute the vehicle service based on the execution related data.

Meanwhile, the service agent 800 can correspond to a service orchestrator.

Meanwhile, the processor 175 according to an embodiment of the present disclosure can further execute a service scheduler 840 configured to exchange data with the service agent 800 for executing a vehicle service. In this case, the service scheduler 840 can be referred to as TIMPANI.

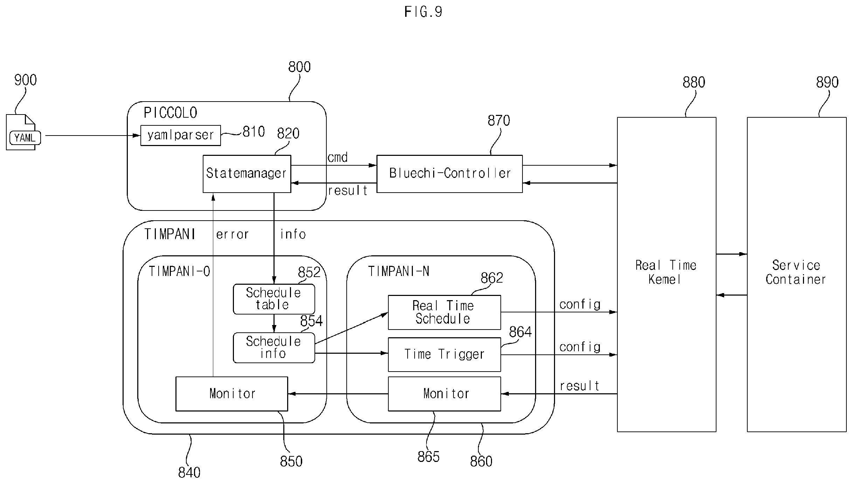

FIGS. 9 and 10 are diagrams referred to in the description of FIG. 8.

FIG. 9 is a diagram illustrating an example of executing a service based on the service agent of FIG. 8.

Referring to FIG. 9, the processor 175 according to an embodiment of the present disclosure can be configured to execute the service agent 800 for executing a vehicle service, the service schedular 840, a kernel 880, and a service container 890.

The service agent 800 can be configured to receive data associated with the execution of a service in a file format from the inside or outside of a vehicle and can be configured to output command data cmd to the outside based on the data associated with the service execution.

For example, the service agent 800 can be configured to receive the data associated with the service execution in a YAML (YAML Ain't Markup Language) file format.

Meanwhile, the service agent 800 can include a parser 810 configured to interpret or parse the data associated with the service execution, and a state manager 820 configured to transmit the command data cmd to a workload orchestrator 870 and manage a difference between a current state and a desired state so that state transition can occur.

Meanwhile, the workload orchestrator 870 can be referred to as a Bluechi controller.

Meanwhile, the workload orchestrator 870 can be configured to control a real-time kernel 880 and a service container 890 to execute a service interpreted by the service agent 800.

That is, the service container 890 can be configured to execute a service based on data from the service agent 800 or the service scheduler 840.

Meanwhile, the state manager 820 can be configured to receive result data from the workload orchestrator 870.

Meanwhile, the state manager 820 can be configured to transmit, to the service scheduler 840, information inf of data associated with the execution of the service interpreted by the parser 810, and can be configured to receive error data from the service scheduler 840.

The service scheduler 840 can include a first service scheduler 850 that operates in direct connection with the service agent 800, and a second service scheduler 860 that operates as a node in indirect connection with the first service scheduler 850.

The first service scheduler 850 can generate a schedule table 852 based on the information inf of data associated with the execution of the service interpreted by the service agent 800, and can generate schedule information 854 based on the schedule table 852 and perform monitoring.

For example, a monitor 850 in the first service scheduler 850 can be configured to transmit result data of the monitored service to the state manager 820 in the service agent 800.

Meanwhile, the schedule information 854 generated by the first service scheduler 850 can be transmitted to the second service scheduler 860.

A real-time scheduler 862 in the second service scheduler 860 can be configured to output real-time scheduling information config for service execution in the real-time kernel 880 and the service container 890 based on the schedule information 854.

Meanwhile a time trigger 864 in the second service scheduler 860 can be configured to output time trigger information config for service execution in the real-time kernel 880 and the service container 890 based on the schedule information 854.

Meanwhile, the monitor 850 in the second service scheduler 860 can collect result data associated with system resource status of a node and real-time driving state, and can be configured to transmit the result data to the monitor 850 in the first service scheduler 850.

FIG. 10 is a diagram illustrating an example of internal configuration of the service agent of FIG. 8 or FIG. 9.

Referring to FIG. 10, the service agent 800 according to an embodiment of the present disclosure can include the parser 810, the gateway 840, the server 830, and the state manager 820.

Meanwhile, the service agent 800 can further include a storage 850.

The parser 810 can be configured to receive data associated with the execution of a vehicle service based on SDV, and can interpret or parse the data associated with the service execution.

Meanwhile, the parser 810 can be configured to receive the data associated with the service execution in a YAML (YAML Ain't Markup Language) file format, and can interpret or parse the data associated with the service execution in the YAML file.

Further, the parser 810 can be configured to transmit the interpreted or parsed data to the server 830 or register the data as a resource in the storage 850.

Meanwhile, the parser 810 can be configured to store data required later for generating workload in the storage 850.

Meanwhile, the parser 810 can be configured to perform transformation into a manifest corresponding to the workload orchestrator 870 which is a multi-node service controller.

For example, the parser 810 can be configured to receive, from a remote procedure call (RPC) sender 805 or REST API, a manifest in the YAML file format which is an example of the data associated with the service execution, or in other formats.

The server 830 can be configured to receive parsing result data of the parser 810 and can share the parsing result data with other modules. In this case, the server 830 can be referred to as an API server.

For example, the server 830 can classify the parsing result data of the parser 810 into condition data and action data and store the classified data in the storage 850.

Meanwhile, the server 830 can be configured to transmit a key value for reading the condition data or action data as part of the parsing result data from the storage 850 to the gateway 840.

Meanwhile, the server 830 can be configured to control some data for managing the state of the service agent 800 or some state information to be stored in the storage 850.

Meanwhile, the server 830 can support or request remote procedure call (RPC) and API for external communication.

Meanwhile, the server 830 can be configured to receive a direct request from a direct requester 801 or can be configured to receive a request for generating workload from a workload generation requester 803.

Meanwhile, the server 830 can be configured to transmit the received direct request or workload generation request to the work orchestrator 870.

The gateway 840 can be configured to receive vehicle messages in various formats and can identify a vehicle state based on the received vehicle messages.

Meanwhile, the gateway 840 can filter data in the received vehicle messages and can operate according to a desired vehicle scenario by triggering an event based on the filtered data.

Meanwhile, the gateway 840 can read condition data stored in the storage 850 based on the key value received from the server 830 and can generate a filter based on the condition data.

Meanwhile, the gateway 840 can be configured to transmit a message for a vehicle sensor to a message sender 807.

Meanwhile, the filter can identify a vehicle state based on the received vehicle message, e.g., DDS message, and can continuously identify whether a condition corresponding to the condition data is satisfied.

Meanwhile, if the condition corresponding to the condition data is satisfied, the gateway 840 can be configured to transmit scenario information to the state manager 820 and delete the filter.

Meanwhile, the state manager 820 can act as a node with the workload orchestrator 870.

For example, the state manager 820 can be configured to manage a difference between a current state and a desired state so that state transition can occur.

Meanwhile, the state manager 820 can be configured to transmit a request for an additional instruction to the workload orchestrator 870 based on the direct request received from the server 830.

Meanwhile, upon receiving, from the gateway 840, scenario information that satisfies the condition, the state manager 820 can set a key value based on the scenario information, and can read action data from the storage 850 based on the set key value.

Meanwhile, the action data can include data indicating a workload container to be executed.

Meanwhile, the state manager 820 can read data, required for generating the workload stored in the storage 850 by the parser 810, based on the action data.

Meanwhile, the state manager 820 can be configured to transmit command data, such as start, update, rollback, or terminate, etc., to the workload orchestrator 870 based on the received data required for generating the workload.

Meanwhile, the workload orchestrator 870 can be configured to execute corresponding functions or commands based on the command data, such as start, update, rollback, or terminate, etc., received from the state manager 820, or can be configured to transmit the command data to the service container 890.

Meanwhile, the storage 850 can be configured to store the key value, and the key value can be used for various services, such as Kubernetes and the like.

Meanwhile, the storage 850 can be configured to store data required for generating workload by the parser 810.

Meanwhile, the storage 850 can be configured to store parsing result data of the parser 810. In this case, the storage 850 can be configured to store the parsing result data by classifying the data into condition data and action data.

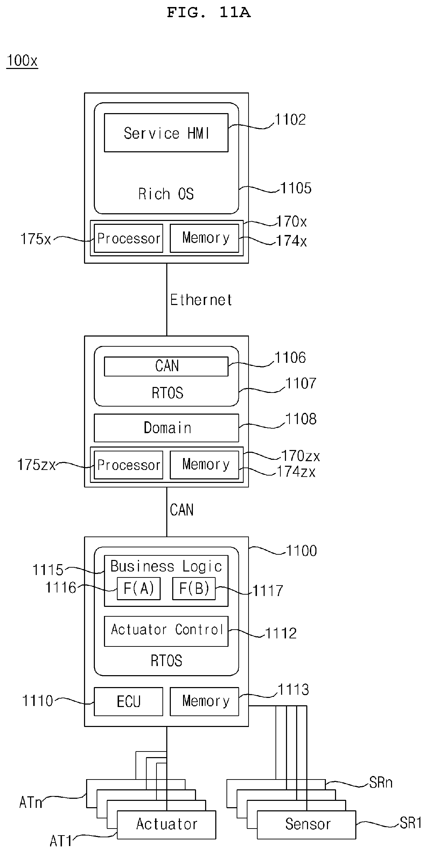

FIG. 11A is an exemplary internal block diagram of a vehicle control apparatus associated with the present disclosure.

Referring to FIG. 11A, a vehicle control apparatus 100x associated with the present disclosure includes a central signal processing device 170x, a zonal signal processing device 170zx, and a control device 1100.

The central signal processing device 170x associated with the present disclosure can include a first processor 175x and a first memory 174x. The first processor 175x can be configured to execute an operating system 1105 and an HMI service 1102.

Meanwhile, the central signal processing device 170x can be configured to perform Ethernet communication with the zonal signal processing device 170zx.

The zonal signal processing device 170zx associated with the present disclosure can include a second processor 175zx and a second memory 174zx. The second processor 175zx can be configured to execute a domain 1108, an operating system 1107, and a CAN communication service 1106.

Meanwhile, the zonal signal processing device 170zx can be configured to perform CAN communication with the control device 1100.

The control device 1100 associated with the present disclosure can include a controller 1230 and a memory 1234. The controller 1230 can be configured to execute an operating system 1236, actuator control 1235, and a control logic-based vehicle service 1105.

Meanwhile, the vehicle service 1105 can include a first vehicle service 1106 and a second vehicle service 1117.

The control device 1100 associated with the present disclosure can be configured to control a plurality of actuators AT1 to ATn or a plurality of sensor devices SR1 to SRn based on the actuator control 1235 or the vehicle service 1105.

In the vehicle control apparatus 100x associated with the present disclosure of FIG. 11A, the controller 1230 in the control device 1100 outputs a control signal for controlling the plurality of actuators AT1 to ATn.

Meanwhile, it is required to update the data in the memory 1234 in order to control the plurality of actuators AT1 to ATn by updating with a new service.

Particularly, in order to control the plurality of actuators AT1 to ATn by updating with a new service, it is required to update data corresponding to the first vehicle service 1106, or data corresponding to the second vehicle service 1117, or data corresponding to the actuator control 1235 in the memory 1234.

However, the control device 1100 performs CAN communication with the zonal signal processing device 170zx, such that it can be difficult for the control device 1100 to receive the updated data from the external server 400 via the zonal signal processing device 170zx and the central signal processing device 170x.

In addition, due to a limited capacity of a third memory 1113 in the control device 1100 and the like, it can be difficult to store new service data or updated data.

For this reason, the vehicle control apparatus 100x associated with the present disclosure in FIG. 11A can be difficult to operate the plurality of actuators AT1 to ATn based on the new vehicle service or updated vehicle service.

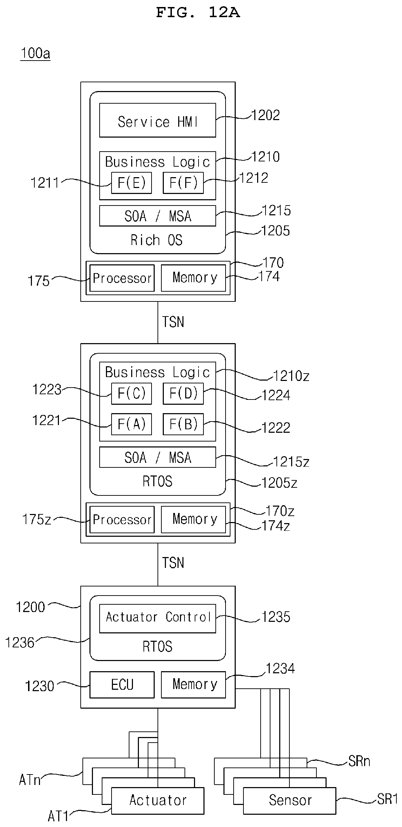

Accordingly, the present disclosure proposes a method of efficiently executing a new service or updated service, which will be described below with reference to FIG. 12A or subsequent figures.

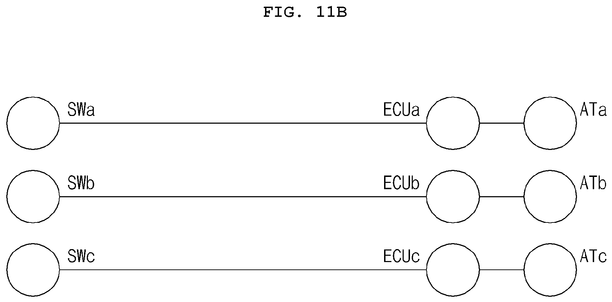

FIG. 11B is a diagram referred to in the description of FIG. 11A.

Referring to FIG. 11B, a plurality of controllers ECUa to ECUc in the vehicle control apparatus 100x associated with the present disclosure can be configured to receive switching signals from a plurality of switches SWa to SWc, respectively, and can be configured to control each of the actuators ATa to ATc based on each of the switching signals.

The method has a drawback in that as the number of actuators ATa to ATc increases, the number of controllers ECUa to ECUc also increases.

Accordingly, the present disclosure proposes a method of efficiently controlling the plurality of actuators by using a controller, which will be described below with reference to FIG. 12A and subsequent figures.

FIG. 12A is an exemplary internal block diagram of a vehicle control apparatus according to an embodiment of the present disclosure.

Referring to FIG. 12A, the vehicle control apparatus 100 according to an embodiment of the present disclosure includes a first signal processing device 170, a second signal processing device 170z electrically connected to the first signal processing device 170, and a control device 1200 including a controller 1230 electrically connected to the second signal processing device 170z and configured to control a plurality of actuators AT1 to ATn.

The first signal processing device 170, which is a central signal processing device, includes a first processor 175 and a first memory 174.

The second signal processing device 170z, which is a zonal signal processing device, includes a second processor 175z and a second memory 174z.

The first signal processing device 170 and the second signal processing device 170z can be configured to perform Time Sensitive Networking (TSN) communication based on Ethernet communication.

A method of communication between the second signal processing device 170z and the control device 1200 is desirably the same as a method of communication between the first signal processing device 170 and the second signal processing device 170z.

For example, the method of communication between the first signal processing device 170z and the second signal processing device 170z can be Time Sensitive Networking (TSN) communication based on Ethernet communication.

Meanwhile, the control device 1200 includes a memory 1234 in addition to the controller 1230.

Meanwhile, the first processor 175 in the first signal processing device 170 according to an embodiment of the present disclosure can be configured to execute an operating system 1205 and can be configured to execute an HMI service 1202 on the operating system 1205.

Meanwhile, unlike FIG. 11A, the first processor 175 in the first signal processing device 170 can be configured to execute a Service-Oriented Architecture (SOA)-based service or a microservice Architecture (MSA)-based microservice 1215 on the operating system 1205.

Meanwhile, the first processor 175 in the first signal processing device 170 can be configured to execute a control logic-based vehicle service 1210 on the operating system 1205.

The vehicle service 1210 can include at least one vehicle service, and a first vehicle service 1211 and a second vehicle service 1212 are illustrated in the drawing.

Meanwhile, the first vehicle service 1211 or the second vehicle service 1212 can include a service for controlling at least one of the plurality of actuators AT1 to ATn.

Meanwhile, the first vehicle service 1211 or the second vehicle service 1212 can be updated based on the updated data received from the external server 400 or an external electronic device 600.

Meanwhile, the first vehicle service 1211 or the second vehicle service 1212 can be a new vehicle service based on data received from the external server 400 or the external electronic device 600.

Meanwhile, the second processor 175z in the second signal processing device 170z according to an embodiment of the present disclosure can be configured to execute an operating system 1205z and can be configured to execute an SOA-based service or a microservice 1215z on the operating system 1205z.

Meanwhile, the second processor 175z in the second signal processing device 170z can be configured to execute a vehicle service 1210z on the operating system 1205z.

The vehicle service 1210z can include at least one vehicle service, and a third vehicle service 1221, a fourth vehicle service 1222, a fifth vehicle service 1223, and a sixth vehicle service 1224 are illustrated in the drawing.

Meanwhile, at least one of the third vehicle service 1221 to the sixth vehicle service 1224 can include a service for controlling at least one of the plurality of actuators AT1 to ATn.

Meanwhile, the third vehicle service 1221 or the fourth vehicle service 1222 can be a new vehicle service based on data received from the external server 400 or the external electronic device 600.

Meanwhile, the fifth vehicle service 1223 or the sixth vehicle service 1224 can be updated based on the updated data received from the external server 400 or the external electronic device 600.

The control device 11200 according to an embodiment of the present disclosure includes a controller 1230 and a memory 1234.

The controller 1230 can be configured to execute an operating system 1236 and can be configured to execute actuator control 1235 on the operating system 1236.

Meanwhile, unlike FIG. 11A, the controller 1230 can be configured to execute only the actuator control 1235 without executing a vehicle service.

That is, the vehicle service is desirably executed by the second signal processing device 170z instead of the control device 1200.

The control device 1200 according to an embodiment of the present disclosure can be configured to control the plurality of actuators AT1 to ATn or the plurality of sensor devices SR1 to SRn based on the actuator control 1235.

In this case, the actuator control 1235 can be configured to output a turn-on signal, a turn-off signal, or an operation control signal for at least one of the plurality of actuators AT1 to ATn.

The control device 1200 according to an embodiment of the present disclosure can be configured to control at least one of the plurality of actuators AT1 to ATn based on sensor data from at least one of the plurality of sensor devices SR1 to SRn.

The second processor 175z according to an embodiment of the present disclosure executes the third vehicle service 1221 to control the controller 1230 in the control device 1200 to output a turn-on signal or a turn-off signal to at least one of the plurality of actuators AT1 to ATn.

Meanwhile, the first memory 174 in the first signal processing device 170 or the second memory 174z in the second signal processing device 170z can be configured to receive data associated with the execution of the fifth vehicle service 1223, which is added or updated in addition to the third vehicle service 1221, from the external server 400 or the external electronic device 600, and can be configured to store the received data.

Meanwhile, if the fifth vehicle service 1223 is executed after the data associated with the execution of the fifth vehicle service 1223, which is added or updated in addition to the third vehicle service 1221, is stored in the first memory 174 of the first signal processing device 170 or the second memory 174z of the third signal processing device 170z2, the second processor 175z according to an embodiment of the present disclosure controls the controller 1230 in the control device 1200 to output a turn-on signal, a turn-off signal, or an operation control signal to at least one of the plurality of actuators AT1 to ATn based on the fifth vehicle service 1223. In this case, the second processor 175z is configured to not transmit the data associated with the execution of the fifth vehicle service 1223, which is added or updated, to the control device 1200.

That is, the control device 1200 does not execute the vehicle service and does not receive the data associated with the execution of the vehicle service.

As described above, while not executing the vehicle service and not receiving the data associated with the execution of the vehicle service, the control device 1200 outputs a turn-on signal, a turn-off signal, or an operation control signal to at least one of the plurality of actuators AT1 to ATn, thereby enabling simple operation of the control device 1200.

In addition, the control device 1200 does not require a new service or a service update, etc., thereby stably controlling the plurality of actuators AT1 to ATn.

Meanwhile, a new service, a service update, and the like can be efficiently executed by the second signal processing device 170z, rather than the control device 1200. Particularly, an SOA-based new service or an updated service can be efficiently executed by the second signal processing device 170z.

Meanwhile, the data associated with the execution of the fifth vehicle service 1223 can include condition data and action data.

Meanwhile, the second processor 175z can be configured to execute the fifth vehicle service 1223 if condition data in the data associated with the execution of the fifth vehicle service 1223 is satisfied. Accordingly, a new fifth vehicle service 1223 or an updated fifth vehicle service 1223 can be efficiently executed.

Meanwhile, the operation control signal can include an operation speed control signal, an operation intensity control signal, or an operation temperature control signal.

For example, the controller 1230 in the control device 1200 can be configured to output the operation speed control signal, the operation intensity control signal, or the operation temperature control signal to at least one of the plurality of actuators AT1 to ATn based on the fifth vehicle service 1223.

Accordingly, the operation speed, operation intensity, or operation temperature of at least one of the plurality of actuators AT1 to ATn can be controlled based on the fifth vehicle service 1223. As a result, the new fifth vehicle service 1223 or the updated fifth vehicle service 1223 can be efficiently executed.

Meanwhile, the fifth vehicle service 1223 can include a microservice.

For example, the second processor 175z can be configured to execute the fifth vehicle service 1223, which is a microservice, if condition data in the data associated with the execution of the fifth vehicle service 1223 is satisfied. Accordingly, a new microservice or an updated microservice can be efficiently executed.

Meanwhile, the first processor 175 can be configured to execute the first vehicle service 1211 based on the received sensor data and transmit information associated with the execution of the first vehicle service 1211 to the second processor 175z.

Meanwhile, the sensor data can include at least one of vehicle driving sensor data, occupant status sensor data, and vehicle surrounding sensor data.

Meanwhile, the first processor 175 can be configured to execute the first vehicle service 1211 if the sensor data satisfies a condition for executing the first vehicle service 1211.

Meanwhile, the second processor 175z can be configured to control the controller 1230 by executing the fifth vehicle service 1223 based on the information associated with the execution of the first vehicle service 1211.

Further, the controller 1230 in the control device 1200 can be configured to output the operation speed control signal, the operation intensity control signal, or the operation temperature control signal to at least one of the plurality of actuators AT1 to ATn based on the fifth vehicle service 1223. Accordingly, a new service or an updated service can be efficiently executed.

Meanwhile, the first processor 175 can be configured to execute the first vehicle service 1211 based on a received first input signal and sensor data and transmit the information associated with the execution of the first vehicle service 1211 to the second processor 175z, and the second processor 175z can be configured to control the controller 1230 by executing the fifth vehicle service 1223 based on the information associated with the execution of the first vehicle service 1211. Accordingly, a new service or an updated service can be efficiently executed.

Meanwhile, the first processor 175 can be configured to transmit the received first input signal to the second processor 175z, and the second processor 175z can be configured to control the controller 1230 by executing the third vehicle service 1221 based on the first input signal.

Meanwhile, the controller 1230 can be configured to control at least one of the plurality of actuators AT1 to ATn based on the third vehicle service 1221. Accordingly, the third vehicle service 1221 can be efficiently executed.

Meanwhile, the second processor 175z can be configured to control the controller 1230 by executing the fifth vehicle service 1223 based on the received sensor data. Accordingly, a new service or an updated service can be efficiently executed based on the sensor data.

Meanwhile, the second processor 175z can be configured to control the controller 1230 by executing the fifth vehicle service 1223 based on the received first input signal and the sensor data. Accordingly, a new service or an updated service can be efficiently executed based on the first input signal and the sensor data.

Meanwhile, the second processor 175z can be configured to execute the fifth vehicle service 1223 if the sensor data satisfies a condition for executing the fifth vehicle service 1223. Accordingly, a new service or an updated service can be efficiently executed based on the sensor data.

Meanwhile, the second processor 175z can be configured to control the controller 1230 by executing the third vehicle service 1221 based on the first input signal. Accordingly, the third vehicle service 1221 can be efficiently executed.

Meanwhile, the data associated with the execution of the fifth vehicle service 1223 can include condition data and action data. In this case, at least one of the condition data and action data can be updated.

Accordingly, a new service or an updated service can be efficiently executed based on the updated data.

Meanwhile, the condition data can include vehicle driving sensor data, occupant status sensor data, and vehicle surrounding sensor data. Accordingly, a new service or an updated service can be efficiently executed based on the condition data.

Meanwhile, when the second processor 175z executes the fifth vehicle service 1223, the controller 1230 can be configured to receive operation status data of the actuators AT1 to ATn, and change the operation status of the actuators AT1 to ATn based on the operation status data of the actuators AT1 to ATn. Accordingly, a new service or an updated service can be efficiently executed based on the operation status data of the actuators.

Meanwhile, the controller 1230 can be configured to control turning on or off of the actuators based on the third vehicle service 1221, and change the operation speed of the actuators AT1 to ATn based on the fifth vehicle service 1223. Accordingly, the fifth vehicle service 1223 can be efficiently executed.

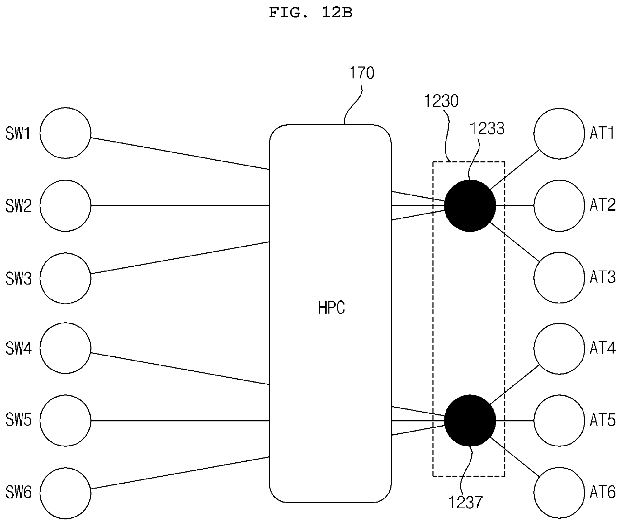

Meanwhile, at least one of the actuators AT1 to ATn of FIG. 12 can operate for the movement of the vehicle seat, and at least one of the sensors SR1 to SRn can be a vehicle internal camera.

In this case, the controller 1230 can be configured to control the actuators AT1 to ATn for the movement of the vehicle seat based on the third vehicle service 1221 executed based on an input signal.

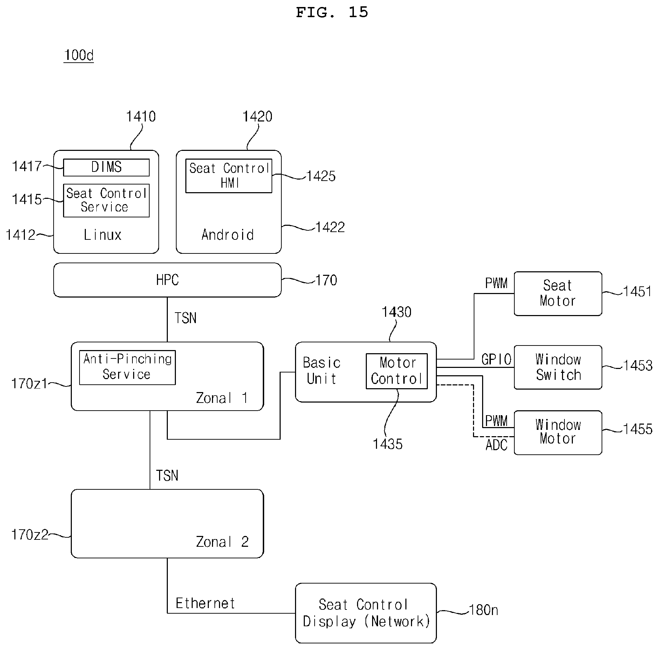

Meanwhile, the controller 1230 can be configured to control the actuators AT1 to ATn or a seat motor 1451 (FIG. 15) for any one of movement speed, movement control, movement intensity, and automatic movement of the vehicle seat, based on the fifth vehicle service 1223 executed based on vehicle internal camera data. Accordingly, the fifth vehicle service 1223 can be efficiently executed.

Meanwhile, at least one of the actuators AT1 to ATn of FIG. 12 can be configured to operate for temperature control in the vehicle, and at least one of the sensors SR1 to SRn can be a vehicle internal camera.

In this case, the controller 1230 can be configured to control the actuators AT1 to ATn for temperature control in the vehicle based on the third vehicle service 1221 executed based on the input signal.

Meanwhile, the controller 1230 can be configured to control the actuators AT1 to ATn for any one of temperature control, wind direction control, and fan speed in the vehicle, based on the fifth vehicle service 1223 executed based on vehicle internal camera data. Accordingly, the fifth vehicle service 1223 can be efficiently executed.

FIG. 12B is a diagram referred to in the description of FIG. 12A.

Referring to FIG. 12B, a plurality of controllers ECUa to ECUc in the vehicle control apparatus 100 according to an embodiment of the present disclosure can be configured to receive switching signals from a plurality of switches SWa to SWc, respectively, and can be configured to control each of the actuators ATa to ATc based on each of the switching signals.

The method has a drawback in that as the number of actuators ATa to ATc increases, the number of controllers ECUa to ECUc also increases.

Accordingly, the present disclosure proposes a method of efficiently controlling the plurality of actuators by using a controller, which will be described below with reference to FIG. 12A and subsequent figures.

FIG. 12B is a diagram referred to in the description of FIG. 12A.

Referring to FIG. 12B, the first signal processing device 170 in the vehicle control apparatus 100 according to an embodiment of the present disclosure can be configured to receive switching signals from a plurality of switches SW1 to SW6, respectively, for operating actuators AT1 to AT6.

Meanwhile, the first signal processing device 170 can be configured to transmit the switching signals from each of the plurality of switches SW1 to SW6 to the control device 1200 via the second signal processing device 170z which is a zonal signal processing device.

Meanwhile, the first controller 1233 in the control device 1200 can be configured to receive some part of the plurality of switching signals, and the second controller 1247 can be configured to receive another part of the plurality of switching signals.

Meanwhile, the first controller 1233 can be configured to control some actuators AT1 to AT3, among the plurality of actuators AT1 to AT6, to operate based on the received switching signals.

Accordingly, unlike FIG. 11B, combined operation of the plurality of actuators AT1 to AT3 can be performed by the first controller 1233, thereby efficiently operating the plurality of actuators AT1 to AT3.

Meanwhile, the second controller 1237 can be configured to control other actuators AT4 to AT6, among the plurality of actuators AT1 to AT6, to operate based on the received switching signals.

Accordingly, unlike FIG. 11B, combined operation of the plurality of actuators AT4 to AT6 can be performed by the second controller 1237, thereby efficiently operating the plurality of actuators AT4 to AT6.

As a result, a composite service for operating the plurality of actuators can be efficiently executed by using the first signal processing device 170 or the second signal processing device 170z.

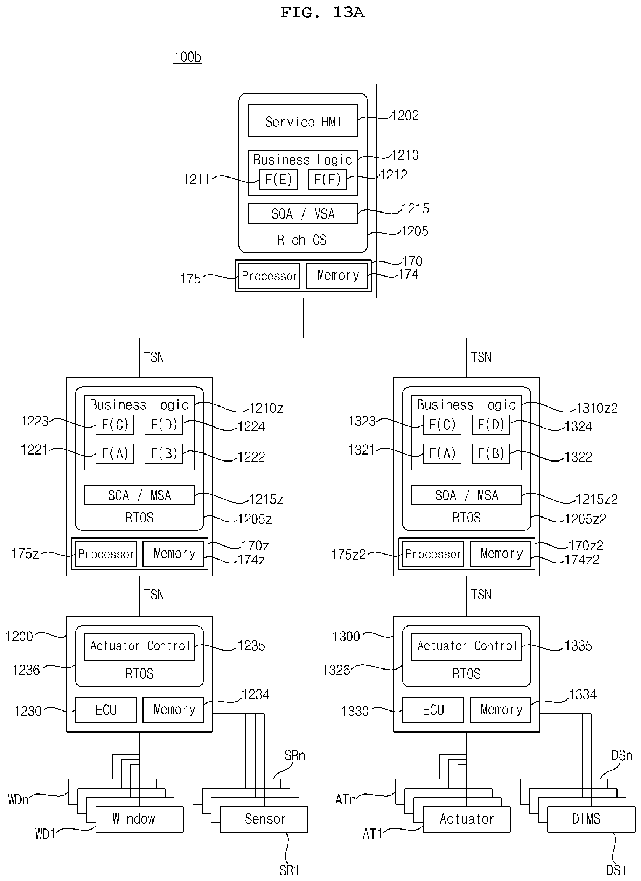

FIG. 13A is an exemplary internal block diagram of a vehicle control apparatus according to another embodiment of the present disclosure.

Referring to FIG. 13A, a vehicle control apparatus 100b according to another embodiment of the present disclosure is similar to the vehicle control apparatus 100a of FIG. 12A, but is different in that the vehicle control apparatus 100b further includes a third signal processing device 170z2 and a second control device 1300.

That is, the vehicle control apparatus 100b according to another embodiment of the present disclosure can include a first signal processing device 170, a second signal processing device 170z electrically connected to the first signal processing device 170, a controller 1230 electrically connected to the second signal processing device 170z and configured to control a plurality of actuators or windows WD1 to WDn, a third signal processing device 170z2 electrically connected to the first signal processing device 170, and a second controller 1230 electrically connected to the third signal processing device 170z2 and configured to control a plurality of actuators AT1 to ATn.

The first signal processing device 170, the second signal processing device 170z, and the controller 1230 are described above with reference to FIG. 12A, such that descriptions thereof will be omitted.

The third signal processing device 170z2 includes a third processor 175z2 and a third memory 174z2.

The second control device 1300 includes a second controller 1330 configured to control the plurality of actuators AT1 to ATn.

The first signal processing device 170 and the third signal processing device 170z2 can be configured to perform Time Sensitive Networking (TSN) communication based on Ethernet communication.

A method of communication between the third signal processing device 170z2 and the second control device 1300 is desirably the same as a method of communication between the first signal processing device 170 and the third signal processing device 170z2.

For example, the method of communication between the first signal processing device 170z and the third signal processing device 170z2 can be TSN communication based on Ethernet communication.

Meanwhile, the second control device 1300 can further include a memory 1334 in addition to the second controller 1330.

Meanwhile, the first processor 175 in the first signal processing device 170 according to an embodiment of the present disclosure can be configured to execute an operating system 1205 and can be configured to execute a first vehicle service 1211 and a second vehicle service 1212 on the operating system 1205.

Meanwhile, the first vehicle service 1211 or the second vehicle service 1212 can include a service for controlling at least one of the plurality of windows WD1 to WDn or the plurality of actuators AT1 to ATn.

Meanwhile, the first vehicle service 1211 or the second vehicle service 1212 can be updated based on the updated data received from the external server 400 or an external electronic device 600.

Meanwhile, the first vehicle service 1211 or the second vehicle service 1212 can be a new vehicle service based on data received from the external server 400 or the external electronic device 600.

Meanwhile, the second processor 175z in the second signal processing device 170z can be configured to execute a third vehicle service 1221, a fourth vehicle service 1222, a fifth vehicle service 1223, and a sixth vehicle service 1224 on an operating system 1205z.

Meanwhile, the third vehicle service 1221, the fourth vehicle service 1222, the fifth vehicle service 1223, and the sixth vehicle service 1224 can be services for controlling at least one of the plurality of windows WD1 to WDn.

Meanwhile, the third vehicle service 1221 or the fourth vehicle service 1222 can be a new vehicle service based on data received from the external server 400 or the external electronic device 600.

Meanwhile, the fifth vehicle service 1223 or the sixth vehicle service 1224 can be updated based on the updated data received from the external server 400 or the external electronic device 600.

Meanwhile, the third processor 175z2 in the third signal processing device 170z2 according to an embodiment of the present disclosure can be configured to execute an operating system 1205z2, and can be configured to execute an SOA-based service or a microservice 1215z2 on the operating system 1205z2.

Meanwhile, the third processor 175z2 in the third signal processing device 170z2 can be configured to execute a vehicle service 1310z2 on the operating system 1205z2.

The vehicle service 1310z2 can include at least one vehicle service, and a seventh vehicle service 1321, an eighth vehicle service 1322, a ninth vehicle service 1323, and a tenth vehicle service 1324 are illustrated in the drawing.

Meanwhile, at least one of the seventh vehicle service 1321 to the tenth vehicle service 1324 can include a service for controlling at least one of the plurality of actuators AT1 to ATn or a plurality of vehicle internal monitoring devices DS1 to DSn.

Meanwhile, the seventh vehicle service 1321 or the eight vehicle service 1322 can be a new vehicle service based on data received from the external server 400 or the external electronic device 600.

Meanwhile, the ninth vehicle service 1323 or the tenth vehicle service 1324 can be updated based on the updated data received from the external server 400 or the external electronic device 600.

The second control device 1300 according to an embodiment of the present disclosure includes a second controller 1330 and a memory 1334.

The second controller 1330 can be configured to execute an operating system 1326 and can be configured to execute an actuator controller 1335 on the operating system 1326.

Meanwhile, unlike FIG. 11A, the second controller 1330 can be configured to execute only actuator control 1335 without executing a vehicle service.

That is, the vehicle service is desirably executed by the third signal processing device 170z2 instead of the second control device 1300.

The second control device 1300 according to an embodiment of the present disclosure can be configured to control the plurality of actuators AT1 to ATn or the plurality of vehicle internal monitoring devices DS1 to DSn based on the actuator control 1335.

In this case, the actuator control 1335 can be configured to output a turn-on signal, a turn-off signal, or an operation control signal for at least one of the plurality of actuators AT1 to ATn or the plurality of vehicle internal monitoring devices DS1 to DSn.

Alternatively, the second control device 1300 according to an embodiment of the present disclosure can be configured to control the plurality of actuators AT1 to ATn based on data received from the plurality of vehicle internal monitoring devices DS1 to DSn and the actuator control 1335.

The second control device 1300 according to an embodiment of the present disclosure can be configured to control at least one of the plurality of actuators AT1 to ATn or the plurality of vehicle internal monitoring devices DS1 to DSn based on sensor data from at least one of the plurality of sensor devices.

The third processor 175z2 according to an embodiment of the present disclosure executes the seventh vehicle service 1321 to control the second controller 1330 in the second control device 1300 to output a turn-on signal or a turn-off signal to at least one of the plurality of actuators AT1 to ATn or the plurality of vehicle internal monitoring devices DS1 to DSn.

Meanwhile, a first memory 174 in the first signal processing device 170 or a second memory 174z in the third signal processing device 170z2 can be configured to receive, from the external server 400 or the external electronic device 600, data associated with the execution of the ninth vehicle service 1323 which is added or updated in addition to the seventh vehicle service 1321, and can be configured to store the received data.

Meanwhile, if the ninth vehicle service 1323 is executed after the data associated with the execution of the ninth vehicle service 1323, which is added or updated in addition to the seventh vehicle service 1321, is stored in the first memory 174 of the first signal processing device 170 or the second memory 174z of the third signal processing device 170z2, the third processor 175z2 according to an embodiment of the present disclosure controls the second controller 1330 in the second control device 1300 to output a turn-on signal, a turn-off signal, or an operation control signal to at least one of the plurality of actuators AT1 to ATn or the plurality of vehicle internal monitoring devices DS1 to DSn based on the ninth vehicle service 1323.

In this case, the third processor 175z2 is configured to not transmit the added or updated data associated with the execution of the ninth vehicle service 1323 to the second control device 1300.

That is, the second control device 1300 does not execute the vehicle service and does not receive the data associated with the execution of the vehicle service.

As described above, while not executing the vehicle service and not receiving the data associated with the execution of the vehicle service, the second control device 1300 outputs a turn-on signal, a turn-off signal, or an operation control signal to at least one of the plurality of actuators AT1 to ATn or the plurality of vehicle internal monitoring devices DS1 to DSn, thereby enabling simple operation of the second control device 1300.

In addition, the second control device 1300 does not require a new service or a service update, etc., thereby stably controlling the plurality of actuators AT1 to ATn or the plurality of vehicle internal monitoring devices DS1 to DSn.

Meanwhile, a new service, a service update, and the like can be efficiently executed by the third signal processing device 170z2, rather than the second control device 1300. Particularly, an SOA-based new service or an updated service can be efficiently executed by the third signal processing device 170z2.

Meanwhile, the data associated with the execution of the ninth vehicle service 1323 can include condition data and action data.

Meanwhile, the third processor 175z2 can be configured to execute the ninth vehicle service 1323 if condition data in the data associated with the execution of the ninth vehicle service 1323 is satisfied. Accordingly, a new ninth vehicle service 1323 or an updated ninth vehicle service 1323 can be efficiently executed.

Meanwhile, the operation control signal can include an operation speed control signal, an operation intensity control signal, or an operation temperature control signal.

For example, the second controller 1330 in the second control device 1300 can be configured to output the operation speed control signal, the operation intensity control signal, or the operation temperature control signal to at least one of the plurality of actuators AT1 to ATn or the plurality of vehicle internal monitoring devices DS1 to DSn, based on the ninth vehicle service 1323.

Accordingly, the operation speed, the operation intensity, or the operation temperature of at least one of the plurality of actuators AT1 to ATn or the plurality of vehicle internal monitoring devices DS1 to DSn can be controlled based on the ninth vehicle service 1323. As a result, the new ninth vehicle service 1323 or the updated ninth vehicle service 1323 can be efficiently executed.

Meanwhile, the ninth vehicle service 1323 can include a microservice.

For example, the third processor 175z2 can be configured to execute the ninth vehicle service 1323 which is a microservice, if condition data in the data associated with the execution of the ninth vehicle service 1323 is satisfied. Accordingly, a new microservice or an updated microservice can be efficiently executed.

Meanwhile, the first processor 175 can be configured to execute the first vehicle service 1211 based on the received sensor data and transmit information associated with the execution of the first vehicle service 1211 to the third processor 175z2.

Meanwhile, the sensor data can include at least one of vehicle driving sensor data, occupant status sensor data, and vehicle surrounding sensor data.

Meanwhile, the first processor 175 can be configured to execute the first vehicle service 1211 if the sensor data satisfies a condition for executing the first vehicle service 1211.

Meanwhile, the third processor 175z2 can be configured to control the second controller 1330 by executing the ninth vehicle service 1323 based on the information associated with the execution of the first vehicle service 1211.

Further, the second controller 1330 in the second control device 1300 can be configured to output the operation speed control signal, the operation intensity control signal, or the operation temperature control signal to at least one of the plurality of actuators AT1 to ATn or the plurality of vehicle internal monitoring devices DS1 to DSn based on the ninth vehicle service 1323. Accordingly, a new service or an updated service can be efficiently executed.

Meanwhile, the first processor 175 can be configured to execute the first vehicle service 1211 based on a received first input signal and sensor data and transmit information associated with the execution of the first vehicle service 1211 to the third processor 175z2, and the third processor 175z2 can be configured to control the second controller 1330 by executing the ninth vehicle service 1323 based on the information associated with the execution of the first vehicle service 1211. Accordingly, a new service or an updated service can be efficiently executed.

Meanwhile, the first processor 175 can be configured to transmit the received first input signal to the third processor 175z2, and the third processor 175z2 can be configured to control the second controller 1330 by executing the seventh vehicle service 1321 based on the first input signal.

Meanwhile, the second controller 1330 can be configured to control at least one of the plurality of actuators AT1 to ATn or the plurality of vehicle internal monitoring devices DS1 to DSn based on the seventh vehicle service 1321. Accordingly, the seventh vehicle service 1321 can be efficiently executed.

Meanwhile, the third processor 175z2 can be configured to control the second controller 1330 by executing the ninth vehicle service 1323 based on the received sensor data. Accordingly, a new service or an updated service can be efficiently executed based on the sensor data.

Meanwhile, the third processor 175z2 can be configured to control the second controller 1330 by executing the ninth vehicle service 1323 based on the received first input signal and sensor data. Accordingly, a new service or an updated service can be efficiently executed based on the first input signal and sensor data.

Meanwhile, the third processor 175z2 can be configured to execute the ninth vehicle service 1323 if the sensor data satisfies a condition for executing the ninth vehicle service 1323. Accordingly, a new service or an updated service can be efficiently executed based on the sensor data.

Meanwhile, the third processor 175z2 can be configured to control the second controller 1330 by executing the seventh vehicle service 1321 based on the first input signal. Accordingly, the seventh vehicle service 1321 can be efficiently executed.

Meanwhile, data associated with the execution of the ninth vehicle service 1323 can include condition data and action data. In this case, at least one of the condition data and action data can be updated.

Accordingly, a new service or an updated service can be efficiently executed based on the updated data.

Meanwhile, the condition data can include vehicle driving sensor data, occupant status sensor data, and vehicle surrounding sensor data. Accordingly, a new service or an updated service can be efficiently executed based on the condition data.

Meanwhile, when the third processor 175z2 executes the ninth vehicle service 1323, the second controller 1330 can be configured to receive operation status data of the actuators AT1 to ATn, and change the operation status of the actuators AT1 to ATn based on the operation status data of the actuators AT1 to ATn. Accordingly, a new service or an updated service can be efficiently executed based on the operation status data of the actuators.

Meanwhile, when the third processor 175z2 executes the ninth vehicle service 1323, the second controller 1330 can be configured to receive operation status data of the plurality of vehicle internal monitoring devices DS1 to DSn, and change the operation status of the plurality of vehicle internal monitoring devices DS1 to DSn based on the operation status data of the plurality of vehicle internal monitoring devices. Accordingly, a new service or an updated service can be efficiently executed based on the operation status data of the plurality of vehicle internal monitoring devices.

Meanwhile, the second controller 1330 can be configured to control turning on or off of the actuators or the vehicle internal monitoring devices based on the seventh vehicle service 1321, and change the operation speed of the actuators AT1 to ATn or the vehicle internal monitoring devices DS1 to DSn based on the ninth vehicle service 1323. Accordingly, the ninth vehicle service 1323 can be efficiently executed.

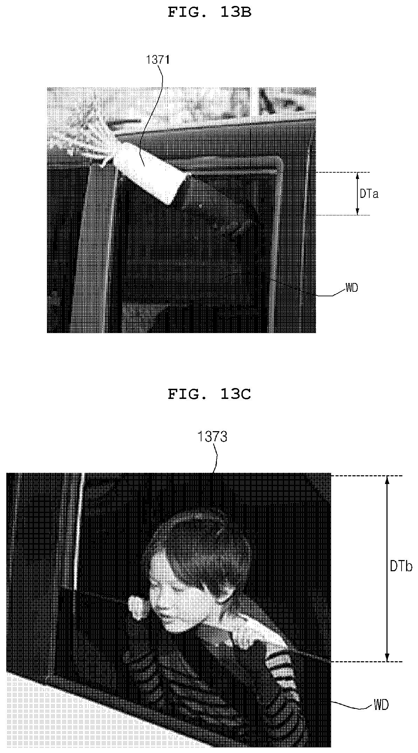

FIGS. 13B and 13C are diagrams referred to in the description of FIG. 13A.

FIG. 13B is a diagram illustrating the case in which an article 1371 is exposed to the outside of a vehicle.

Referring to FIG. 13B, the first signal processing device 170 or the third signal processing device 170z2 receives monitoring data from at least one of the plurality of vehicle internal monitoring devices DS1 to DSn, and can be configured to execute a vehicle service of automatically adjusting an opening distance of a vehicle window based on the monitoring data even when there is no separate input signal.

For example, the first processor 175 in the first signal processing device 170 can be configured to execute the first vehicle service 1211 which is a new vehicle service received from the external server 400 or the external electronic device 600, and the like.

The first vehicle service 1211 can be a vehicle service of automatically adjusting the operation of a vehicle window based on the monitoring data from the vehicle internal monitoring device.

For example, the first processor 175 can be configured to execute the first vehicle service 1211 if a condition for executing the first vehicle service 1211 is satisfied based on the monitoring data.

Meanwhile, the first processor 175 in the first signal processing device 170 can be configured to execute the first vehicle service 1211 and transmit information associated with the execution of the first vehicle service 1211 to the second processor 175z.

Meanwhile, the second processor 175z in the second signal processing device 170z can be configured to control the controller 1230 by executing the fifth vehicle service 1223 based on the information associated with the execution of the first vehicle service 1211.

Meanwhile, the fifth vehicle service 1223 can be a vehicle service of automatically adjusting the operation of a vehicle window based on the monitoring data from the vehicle internal monitoring device.

Meanwhile, data associated with the execution of the fifth vehicle service 1223 can include condition data and action data.

For example, the second processor 175z in the second signal processing device 170z determines, based on the monitoring data, whether the condition data in the data associated with the execution of the fifth vehicle service 1223 is satisfied, and if the condition data is satisfied, the second processor 175z can be configured to control the controller 1230 in the control device 1200 based on the action data.

In response thereto, the controller 1230 in the control device 1200 controls a window WD required to be controlled among the plurality of windows WD1 to WDn, to automatically adjust an opening distance of the window WD according to a size of the article 1371. Accordingly, the vehicle service can be efficiently performed.

Meanwhile, the second processor 175z can be configured to update data associated with the execution of the fifth vehicle service 1223.

For example, in the case in which a vehicle driver is a first driver and a safety level is set to a first level, the second processor 175z can be configured to update action data in the data associated with the execution of the fifth vehicle service 1223 to a first value.

Accordingly, when the article 1371 is exposed to the outside of a vehicle, the controller 1230 can be configured to control an opening distance of the window WD to be a first distance DTa based on action data of the first value.

In another example, in the case in which a vehicle driver is a first driver and a safety level is set to a second level higher than the first level, the second processor 175z can be configured to update action data in the data associated with the execution of the fifth vehicle service 1223 to a second value.

Accordingly, when the article 1371 is exposed to the outside of a vehicle, the controller 1230 can be configured to control an opening distance of the window WD to be a second distance, smaller than the first distance, based on action data of the second value.

As a result, the second processor 175z can be configured to control the window opening distance to decrease as the safety level increases.

FIG. 13C is a diagram illustrating the case in which a minor 1373 is exposed to the outside of a vehicle.

For example, in the case in which a vehicle occupant is a first occupant who is an adult, the second processor 175z can be configured to update action data in the data associated with the execution of the fifth vehicle service 1223 to a third value.

Accordingly, when the first occupant is exposed to the outside of a vehicle, the controller 1230 can be configured to control an opening distance of the window WD to be a third distance based on action data of the third value.

In another example, in the case in which a vehicle occupant is a second occupant 1373 who is a minor as illustrated herein, the second processor 175z can be configured to update action data in the data associated with the execution of the fifth vehicle service 1223 to a fourth value.

Accordingly, when the second occupant 1373 is exposed to the outside of a vehicle, the controller 1230 can be configured to control an opening distance of the window to be a fourth distance DTb, smaller than the third distance, based on action data of the fourth value.

As a result, the second processor 175z can change the window opening distance according to the age of a vehicle occupant.

Meanwhile, the controller 1230 can be configured to control the actuators AT1 to ATn for locking or unlocking a vehicle window based on the third vehicle service 1221 executed based on an input signal.

Meanwhile, the controller 1230 can be configured to control the actuators AT1 to ATn or the windows WD1 to WDn for any one of window closing speed, window opening control, window closing strength, and automatic window locking based on the fifth vehicle service 1223 executed based on camera data from a vehicle internal camera which is an example of a vehicle internal monitoring device. Accordingly, the fifth vehicle service 1223 can be efficiently executed.

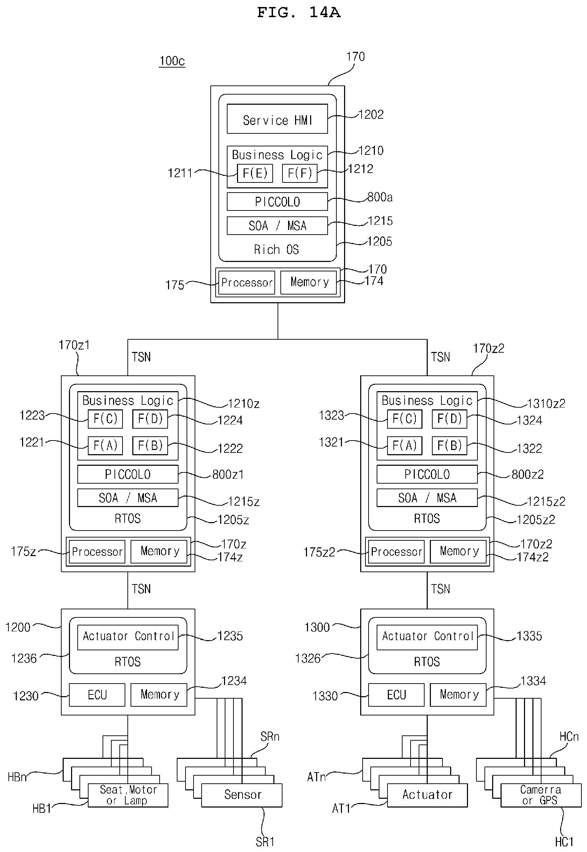

FIG. 14A is an exemplary internal block diagram of a vehicle control apparatus according to yet another embodiment of the present disclosure.

Referring to FIG. 14A, a vehicle control apparatus 100c according to yet another embodiment of the present disclosure is similar to the vehicle control apparatus 100b of FIG. 13A, with a difference being that the controller 1200 can be configured to control a seat motor or lamps HB1 to HBn, rather than the windows WD1 to WDn.

Meanwhile, the controller 1200 can be configured to receive data from a camera or GPS HC1 to HCn, instead of the vehicle internal monitoring devices DS1 to DSn.

Alternatively, the second controller 1300 can be configured to control the camera or the GPS HC1 to HCn.

Meanwhile, the first processor 175 in the vehicle control apparatus 100c according to yet another embodiment of the present disclosure can be configured to execute a first service agent 800a on the operating system 1205, unlike FIG. 13A.

Meanwhile, the second processor 175z in the vehicle control apparatus 100c according to yet another embodiment of the present disclosure can be configured to execute a second service agent 800z1 on an operating system 1205z, unlike FIG. 13A.

Meanwhile, the third processor 175z2 in the vehicle control apparatus 100c according to yet another embodiment of the present disclosure can be configured to execute a third service agent 800z2 on the operating system 1205z2, unlike FIG. 13A.

Meanwhile, the first service agent 800a, the second service agent 800z1, and the third service agent 800z2 can correspond to the service agent 800 of FIG. 9 or FIG. 10.

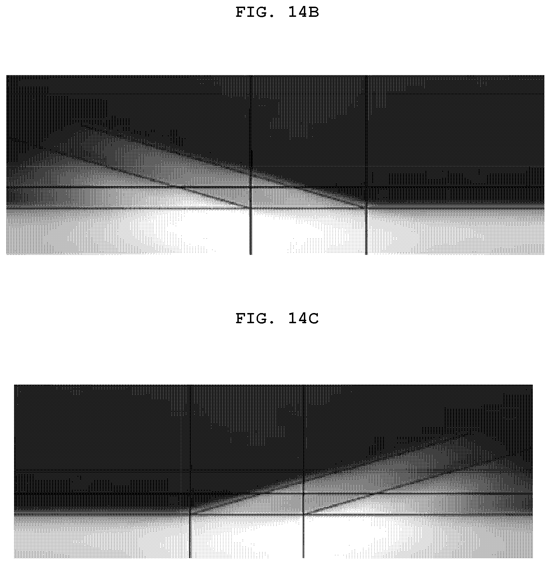

FIGS. 14B to 14D are diagrams referred to in the description of FIG. 14A.

FIG. 14B is an image showing a first pattern of light output from a lamp, and FIG. 15B is an image showing a second pattern of light output from a lamp.

In the vehicle control apparatus 100c of FIG. 14A, the first processor 175, the second processor 175z, or the third processor 175z2 can be configured to set a beam pattern of the vehicle based on data from the camera or GPS HC1 to HCn by using an image including a road sign in front of the vehicle or local information from GPS.

Meanwhile, the first processor 175, the second processor 175z, or the third processor 175z2 can be configured to receive data associated with the execution of a vehicle service for a vehicle lamp pattern from the external server 400 or the external electronic device 600, etc., based on the road sign in front of the vehicle or based on the local information from GPS, or generate itself the data associated with the execution of the vehicle service for the vehicle lamp pattern.

Specifically, the first service agent 800a, the second service agent 800z1, or the third service agent 800z2 can be configured to receive the data associated with the execution of the vehicle service for the vehicle lamp pattern, execute the vehicle service.

For example, if a vehicle driving area is the United Kingdom (UK) based on the image including the road sign in front of a vehicle or the local information from GPS, the first processor 175 or the second processor 175z can be configured to control the controller 1200 for outputting light of a first pattern as illustrated in FIG. 14B. Accordingly, the controller 1200 can control at least one of the lamps HB1 to HBn.

In another example, if a vehicle driving area is France, in which the driving direction is different from the UK, based on the image including the road sign in front of the vehicle or the local information from GPS, the first processor 175 or the second processor 175z can be configured to control the controller 1200 for outputting light of a second pattern as illustrated in FIG. 14C. Accordingly, the controller 1200 can control at least one of the lamps HB1 to HBn.

As described above, a plurality of sensors or a plurality of actuators and the like can be used to provide a lamp pattern changing service, thereby efficiently providing a vehicle service according to a driver's intentions.

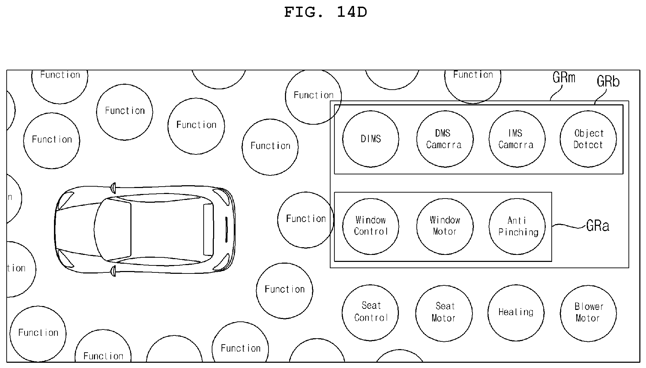

FIG. 14D is a diagram illustrating various examples of services.

Referring to FIG. 14D, examples of the services can include seat control service, seat motor service, heating service, blower motor service, window control service, window motor service, anti-pinching service, vehicle internal monitoring (DIMS) service, internal monitoring camera service, object detection service, and the like.

Meanwhile, the first processor 175 or the second processor 175z can be configured to execute a vehicle service with a combination of a plurality of services.

For example, the first processor 175, the second processor 175z, or the third processor 175z2 can be configured to execute a first vehicle service including the window control service, the window motor service, and the anti-pinching service.

In this case, the first vehicle service can be downloaded from the external server 400 or the external electronic device 600, or can be generated by the first processor 175, the second processor 175z, or the third processor 175z2.

Meanwhile, the first service agent 800a, the second service agent 800z1, or the third service agent 800z2 can be configured to receive data associated with the execution of the first vehicle service including a composite service, and can be configured to execute the first vehicle service based on the data.

In another example, the first processor 175, the second processor 175z, or the third processor 175z2 can be configured to execute a second vehicle service including the vehicle internal monitoring (DIMS) service, the internal monitoring camera service, and the object detection service.

Meanwhile, the first service agent 800a, the second service agent 800z1, or the third service agent 800z2 can be configured to receive data associated with the execution of the second vehicle service including a composite service, and can be configured to execute the second vehicle service based on the data.

FIG. 15 is an exemplary internal block diagram illustrating a vehicle control apparatus according to yet another embodiment of the present disclosure.

Referring to FIG. 15, a vehicle control apparatus 100d according to yet another embodiment of the present disclosure can include a first signal processing device 170 which is a central signal processing device, a second signal processing device and a third signal processing device 170z2170z1 which are zonal signal processing devices, and a control device 1430.

The first signal processing device 170 can be configured to execute the vehicle internal monitoring (DIMS) service and the seat control service on the first operating system, and can be configured to execute the seat control HMI service on the second operating system.

The second signal processing device 170z1 can be configured to perform Time-Sensitive Networking (TSN) communication with the first signal processing device 170 and can be electrically connected with a control device 1430 to control the control device 1430.

Meanwhile, the second signal processing device 170z1 can be configured to execute the anti-pinching service and can be configured to control the control device 1430 based on the anti-pinching service.

The control device 1430 can be configured to execute monitor control 1435 based on the anti-pinching service.

For example, the control device 1430 can be configured to output a Pulse Width Modulation (PWM) signal to a seat motor 1451, can be configured to output a general-purpose input/output (GPIO) signal to a window switch 1453, and can be configured to output a PWM signal to a window motor 1455.

Meanwhile, the control device 1430 can be configured to receive an ADC Signal from the window motor 1455, and can be configured to output the PWM signal to the window motor 1455 based on the ADC signal.

Accordingly, the anti-pinching service corresponding to composite control, such as seat, window, etc., can be efficiently executed by using the control device 1430.

The third signal processing device 170z2 can be configured to perform TSN communication with the second signal processing device 170z1 and can be configured to control a seat control display 170n.

In this case, the third signal processing device 170z2 can display predetermined information or image on a seat control display 180n based on Ethernet communication. Meanwhile, the seat control display 170n can be a network display.

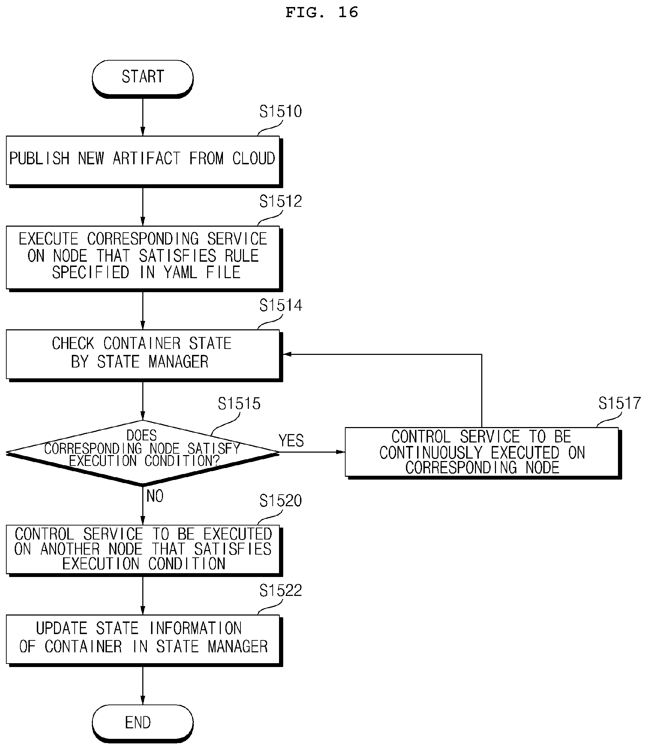

FIG. 16 is a flowchart illustrating the operation of a vehicle control apparatus according to an embodiment of the present disclosure.

Referring to FIG. 16, the vehicle control apparatus 100 according to an embodiment of the present disclosure can be configured to receive new artifact publish information from the external server 400 or the external electronic device 600 (S1510).

For example, the first signal processing device 170 in the vehicle control apparatus 100 can be configured to receive the new artifact publish information and update existing data associated with the execution of a vehicle service based on the new artifact publish information.

In another example, the first signal processing device 170 in the vehicle control apparatus 100 according to an embodiment of the present disclosure can be configured to receive the updated data associated with the execution of a vehicle service based on the new artifact publish information.

Meanwhile, the data associated with the execution of the vehicle service can correspond to YAML file data.

Then, the first signal processing device 170 in the vehicle control apparatus 100 can be configured to execute the corresponding service on a node that satisfies a rule in the updated data associated with the execution of the vehicle service or in updated YAML file data (S1512).

For example, the first signal processing device 170 can be configured to execute the first vehicle service or a vehicle service corresponding to the first vehicle service based on the updated data associated with the execution of the vehicle service or updated YAML file data.

For example, the second signal processing device 170z can be configured to control the controller 1230 by executing the fifth vehicle service 1223 based on information associated with the execution of the first vehicle service 1211 in the first signal device 170.

Accordingly, the controller 1230 can be configured to output a turn-on signal, a turn-off signal, or an operation control signal to at least one of the plurality of actuators AT1 to ATn.

Meanwhile, the first signal processing device 170 executes the service agent 800a, and the state manager 820 in the service agent 800a can be configured to check the state of a container associated with the executed vehicle service (S1514).

Then, the state manager 820 in the service agent 800a determines whether the node, which satisfies the rule in the updated data associated with the execution of the vehicle service or in the updated YAML file data, satisfies the condition data (S1515), and if so, the state manager 820 can be configured to continuously execute the vehicle service on the node (S1517).

For example, if the condition data in the updated data associated with the execution of the vehicle service or in the updated YAML file data is continuously satisfied, the first signal processing device 170 can be configured to control the controller 1230 by continuously executing the fifth vehicle service 1223.

Meanwhile, if the node, which satisfies the rule in the updated data associated with the execution of the vehicle service or in the updated YAML file data, does not satisfy the condition data in operation 1515 (S1515), the first signal processing device 170 can be configured to execute the vehicle service on another node that satisfies the execution condition (S1520).

For example, the first signal processing device 170 can be configured to control at least one of the plurality of actuators AT1 to ATn by controlling the second controller 1330 in the second control device 1300 using the third signal processing device 170z2 of FIG. 14A. Accordingly, the vehicle service can be efficiently executed.

Then, the state manager 820 in the service agent 800a can be configured to update state information of a container associated with the vehicle service executed on another node (S1522).

Meanwhile, the first signal processing device 170 can be configured to update condition data or action data in the data associated with the execution of the vehicle service.

For example, the first signal processing device 170 can be configured to update the data associated with the execution of the vehicle service by using condition data added to the existing vehicle service.

Specifically, the first signal processing device 170 can fully open a window when a vehicle starts, and can be configured to update a vehicle service for closing the window when vehicle speed is 50 km/h, so that the first signal processing device 170 can open only half of the window when vehicle speed ranges between 50 km/h and 80 km/h and can close the window when vehicle speed exceeds 80 km/h.

As described above, the vehicle service can be simply updated by adding only some of the condition data and the like.

Similarly, the first signal processing device 170 can be configured to update the data associated with the execution of the vehicle service by using the action data added to the existing vehicle service.

For example, the first signal processing device 170 can be configured to combine window control and temperature control by using action data added to the vehicle service for window control.

As described above, the function of the vehicle service can be simply updated by adding only some of the action data and the like.

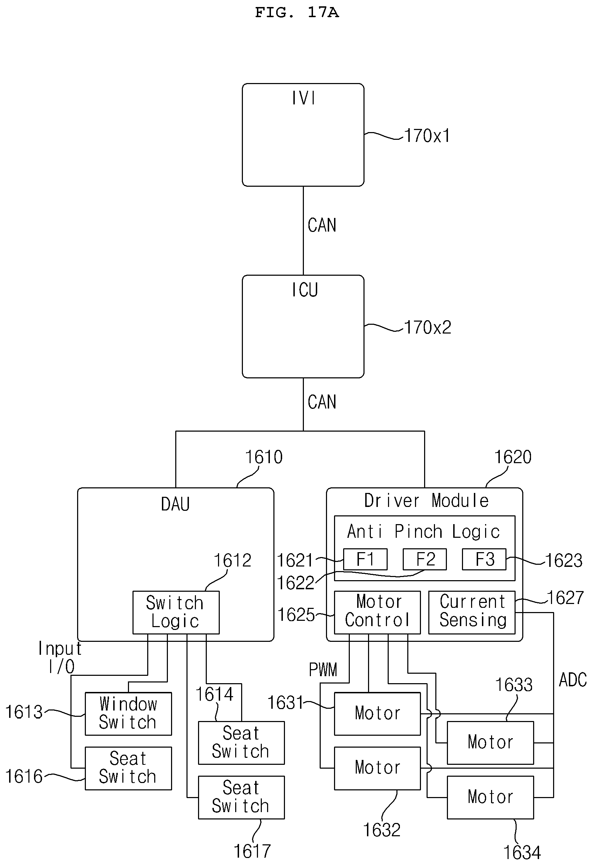

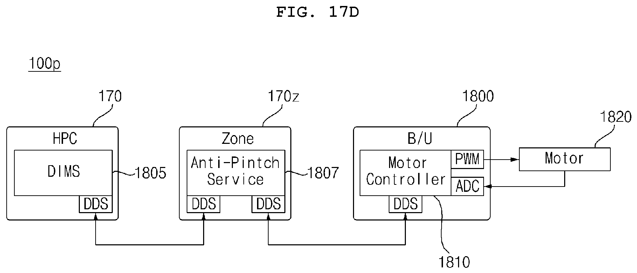

FIGS. 17A to 21B are diagrams referred to in the description of FIG. 16.

FIG. 17A is a diagram illustrating an example of anti-pinching in a vehicle control apparatus associated with the present disclosure.

Referring to FIG. 17A, a first signal processing device 170x1 in the vehicle control apparatus associated with the present disclosure can be configured to perform CAN communication with a second signal processing device 170x2, and the second signal processing device 170x2 can be configured to perform CAN communication with a control device 1610 and a drive device 1620.

Meanwhile, the control device 1610 can be configured to control a window switch 1613, a seat switch 1614, a seat switch 1616, and a seat switch 1617 based on a switch logic 1612.

Meanwhile, the drive device 1620 can be configured to execute a plurality of vehicle services 1621, 1622, and 1623 in the anti-pinching service, and can be configured to control a plurality of motors 1631 to 1634 based on motor control 1625.

Meanwhile, the drive device 1620 can be configured to perform current sensing 1627 based on an ADC signal which is a sensing signal from the plurality of motors 1631 to 1634, and can be configured to control the plurality of motors 1631 to 1634 based on the current sensing 1627.

The vehicle control apparatus associated with the present disclosure has a drawback in that the plurality of vehicle services 1621, 1622, and 1623 are executed in the drive device 1620, and thus can not be easily updated, and it is difficult to add a new function.

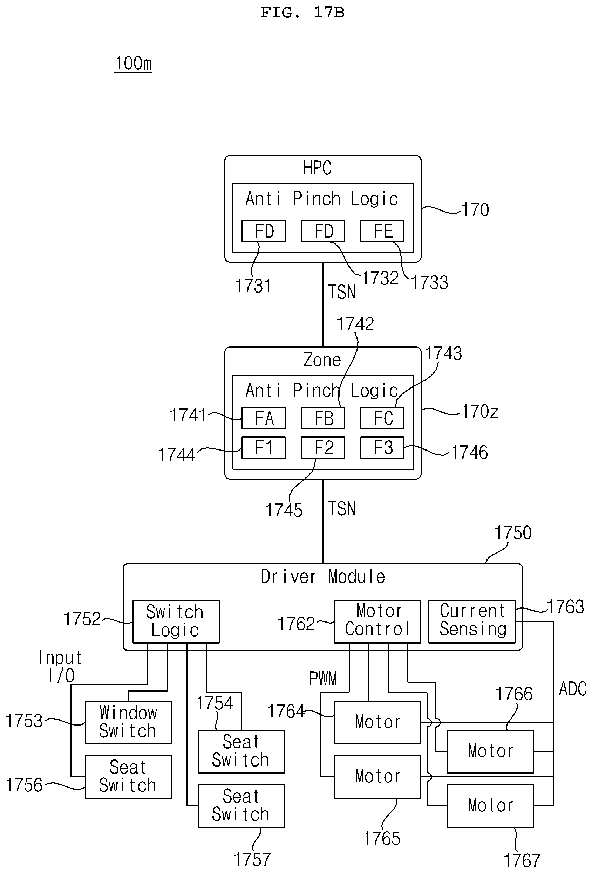

FIG. 17B is a diagram illustrating another example of anti-pinching in a vehicle control apparatus according to an embodiment of the present disclosure.

Referring to FIG. 17B, a first signal processing device 170 in a vehicle control apparatus 100m according to an embodiment of the present disclosure can be configured to perform TSN communication with a second signal processing device 170z, and the second signal processing device 170z can be configured to perform TSN communication with a control device 1750.

The first signal processing device 170 can be configured to execute a plurality of vehicle services 1731, 1732, and 1733 in the anti-pinching service.

In this case, the first signal processing device 170 can be configured to update or newly receive at least one of the plurality of vehicle services 1731, 1732, and 1733.

The second signal processing device 170z can be configured to execute a plurality of vehicle services 1741 to 1746 in the anti-pinching service.

In this case, the second signal processing device 170z can be configured to update only some services 1741 to 1743 without updating other services 1745 and 1746 among the plurality of vehicle services 1741 to 1746.

Unlike FIG. 17A, the control device 1750 can have the function of a driver, thereby enabling integrated functionality.

Meanwhile, the control device 1750 can be configured to control a window switch 1753, a seat switch 1754, a seat switch 1757, and a seat switch 1757 based on a switch logic 1712.

Meanwhile, the control device 1750 can be configured to control a plurality of motors 1764 to 1767 based on motor control 1762.

Meanwhile, the driver 1750 can be configured to perform current sensing 1763 based on an ADC signal which is a sensing signal from the plurality of motors 1764 to 1767, and can be configured to control the plurality of motors 1764 to 1767 based on the current sensing 1763.

In the vehicle control apparatus 100m according to an embodiment of the present disclosure, the anti-pinching service is executed in the first signal processing device 170 or the second signal processing device 170z, rather than the control device 1750, and thus can be easily updated.

Particularly, the updating is performed based on TSN communication rather than CAN communication, thereby allowing for rapid updating.

Meanwhile, unlike FIG. 17A, the control device 1750 provides integrated functionality, thereby executing a composite service including motor control, switch control, and the like.

Meanwhile, unlike FIG. 17B, it is possible that the first signal processing device 170 can be configured to execute the first service agent 800a, and the second signal processing device 170z can be configured to execute the second service agent 800b.

The first service agent 800a and the second service agent 800b can correspond to the service agent 800 of FIG. 9 or FIG. 10.

Particularly, the first service agent 800a and the second service agent 800b can be configured to update data associated with the execution of a vehicle service or YAML file data from a package service 1792 in the server 1790.

In addition, the first service agent 800a and the second service agent 800b can be configured to implement multiple functions by using the control device 1750 based on the updated data associated with the execution of a vehicle service or YAML file data.

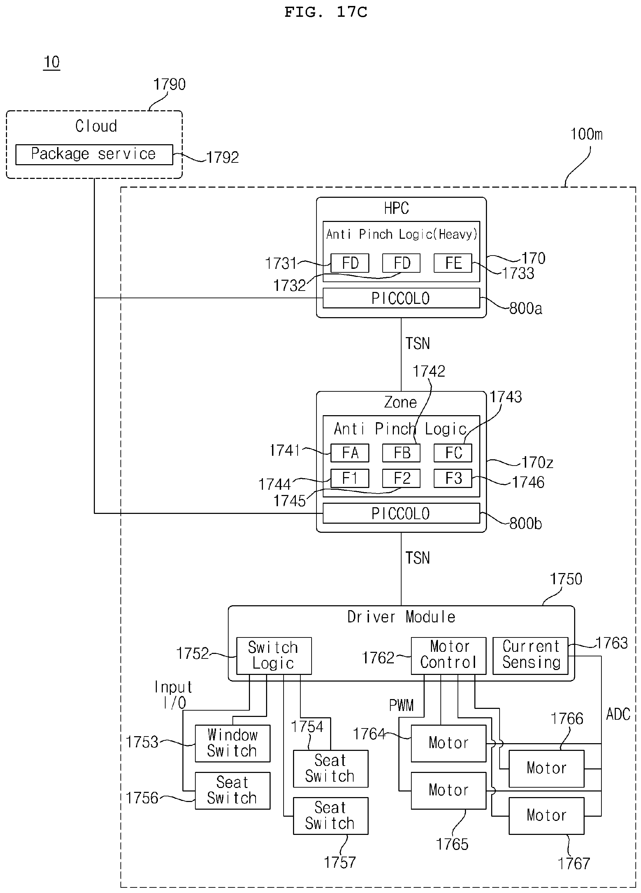

FIG. 17C is a diagram illustrating yet another example of anti-pinching in a vehicle control apparatus according to an embodiment of the present disclosure.

Referring to FIG. 17C, a first signal processing device 170 in a vehicle control apparatus 100p according to an embodiment of the present disclosure executes a vehicle internal monitoring service 1805, and can be configured to transmit information associated with the execution of the vehicle internal monitoring service 1805 to a second signal processing device 170z.

Then, the second signal processing device 170z can be configured to execute an anti-pinching service 1807 based on the information associated with the execution of the vehicle internal monitoring service 1805, and can be configured to control a control device 1800 based on data associated with the execution of the anti-pinching service 1807.

Subsequently, the control device 1800 can be configured to control a motor 1820 by executing motor control 1810 based on the data associated with the execution of the anti-pinching service 1807.

Meanwhile, the control device 1800 can be configured to receive current sensing information from the motor 1820 while controlling the motor 1820, and can be configured to transmit the current sensing information to the second signal processing device 170z.

Meanwhile, the second signal processing device 170z determines whether condition data in the data associated with the execution of the anti-pinching service 1807 is satisfied based on the received current sensing information, and if so, the second signal processing device 170z can continuously execute the anti-pinching service 1807.

Meanwhile, the second signal processing device 170z can be configured to update condition data or action data in the data associated with the execution of the anti-pinching service 1807, and can be configured to control the control device 1800 according to an updated new function.

Meanwhile, based on a combination of the vehicle internal monitoring service 1805 in the first signal processing device 170 with the anti-pinching service 1807 in the second signal processing device 170z, the control device 1800 can be configured to control a window motor 1820 for at least one of window closing speed, window opening control, window closing strength, and automatic window locking.

Accordingly, an SOA-based new service or updated service can be efficiently executed.

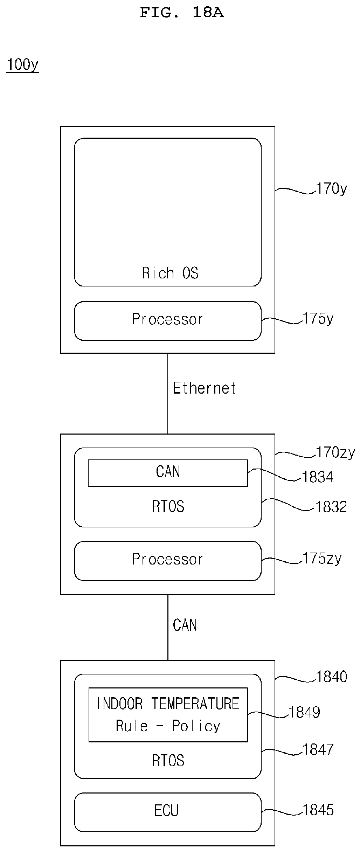

FIG. 18A is a diagram illustrating an example of operation of a vehicle control apparatus to which artificial intelligence (AI) is not applied.

Referring to FIG. 18A, a vehicle control apparatus 100y associated with the present disclosure can include a first signal processing device 170y including a first processor 175y, a second signal processing device 170zy including a second processor 175zy, and a control device 1840 including a controller 1845.

The first signal processing device 170y can be configured to perform Ethernet communication with the second signal processing device 170zy, and the second signal processing device 170zy can be configured to perform CAN communication with the control device 1840.

The second processor 175zy can be configured to execute a CAN communication service 1834 with an operating system 1832.

The controller 1845 can be configured to execute an operating system 1847 and can be configured to control indoor temperature based on an indoor temperature control rule 1849.

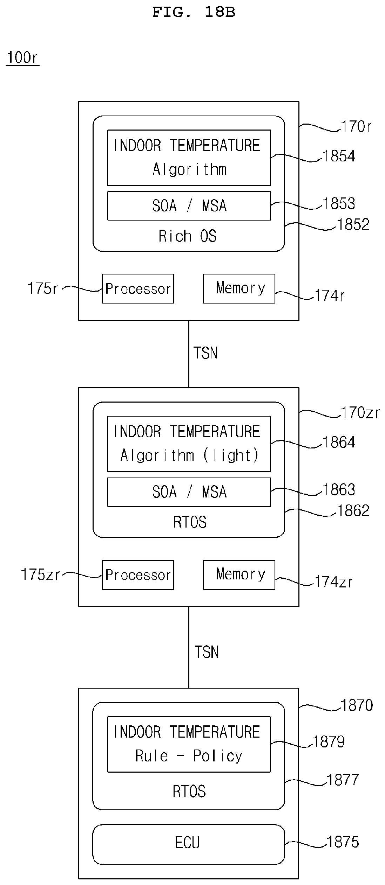

FIG. 18B is a diagram illustrating an example of operation of a vehicle control apparatus to which artificial intelligence (AI) is applied, according to an embodiment of the present disclosure.

Referring to FIG. 18B, a vehicle control apparatus 100r according to an embodiment of the present disclosure can include a first signal processing device 170r including a first processor 175r and a first memory 174r, a second signal processing device 170zr including a second processor 175zr and a second memory 174zr, and a control device 1870 including a controller 1875.

The first signal processing device 170r can be configured to perform TSN communication with the second signal processing device 170zr, and the second signal processing device 170zr can be configured to perform TSN communication with the control device 1870.

The first processor 175r can be configured to execute an operating system 1852, and can be configured to execute an SOA-based service or a microservice 1853 and an AI-based indoor temperature control service on the operating system 1854.

The second processor 175zr can be configured to execute an operating system 1862, and can be configured to execute an SOA-based service or a microservice 1863 and an AI-based indoor temperature or light control service 1864 on the operating system 1862.

The controller 1845 can be configured to execute an operating system 1877, and can be configured to execute indoor temperature control based on an indoor temperature control rule 1879.

Particularly, the controller 1845 can be configured to execute the indoor temperature control based on the AI-based indoor temperature control service 1854 in the first processor 175r or based on the AI-based indoor temperature or light control service 1864 in the second processor 175zr.

For example, the controller 1845 can be configured to control the actuators AT1 to ATn for any one of temperature control, wind direction control, and fan speed in the vehicle.

Accordingly, the AI-based indoor temperature control service can be provided in consideration of occupant status or external temperature condition and the like based on DIMS.

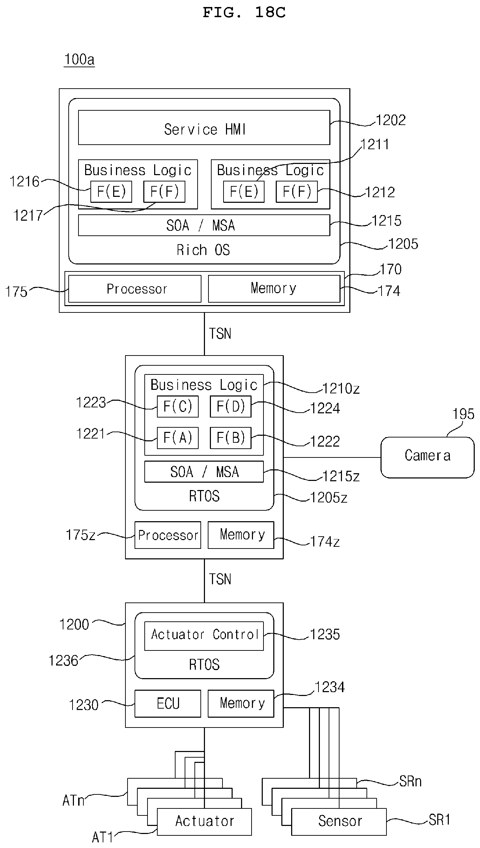

FIG. 18C is a diagram illustrating an example of providing a vehicle service when a new device is added.

Referring to FIG. 18C, a vehicle control apparatus 100a according to an embodiment of the present disclosure includes a first signal processing device 170, a second signal processing device 170z electrically connected to the first signal processing device 170, and a control device 1200 including a controller 1230 electrically connected to the second signal processing device 170z and configured to control a plurality of actuators AT1 to ATn.

Meanwhile, when a first device 195 is added to the second signal processing device 170z, the second signal processing device 170z can be configured to transmit information associated with the added first device 195 to the first signal processing device 170.

Meanwhile, the first processor 175 in the first signal processing device 170 can be configured to execute an SOA-based service or a microservice 1215 on the operating system 1205.

Meanwhile, the first processor 175 in the first signal processing device 170 can be configured to execute a logic-based first vehicle service 1211 and a logic-based second vehicle service 1212 on the operating system 1205.

Meanwhile, the first processor 175 in the first signal processing device 170 can be configured to receive data associated with the execution of a vehicle service corresponding to the first device 195, from the external server 400 and the like based on the information associated with the added first device 195.

Further, the first processor 175 in the first signal processing device 170 can be configured to execute additional services 1216 and 1217 associated with the added first device 195.

In this case, the additional services 1216 and 1217 can be DIMS services associated with the first device 195 corresponding to a camera.

Meanwhile, the second processor 175z in the second signal processing device 170z can be configured to execute a plurality of vehicle services 1221 to 1224, as illustrated in FIG. 12A.

The control device 1200 according to an embodiment of the present disclosure can include a controller 1230 and a memory 1234, and can be configured to control at least one of the plurality of actuators AT1 to ATn based on DIMS by using the additional services 1216 and 1217 in the first signal processing device 170.

As a result, when the first device 195 is newly connected to the second signal processing device 170z or the control device 1200, the first processor 175 can be configured to receive, from the server 400, data for executing a service corresponding to the first device 195 and can be configured to execute the corresponding service. Accordingly, a new service or an updated service corresponding to the first device 195 can be efficiently executed.

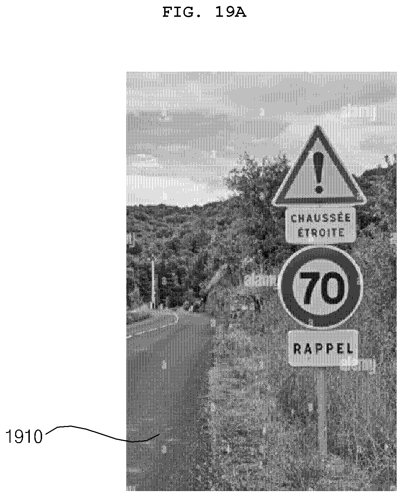

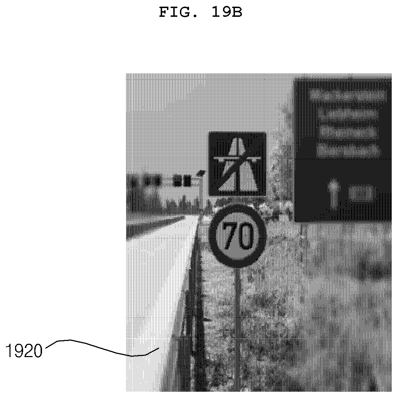

FIG. 19A is a diagram illustrating a first image 1910 including a speed limit sign in a first area in response to addition of the camera 195 of FIG. 18C, and FIG. 19B is a diagram illustrating a second image 1920 including a speed limit sign in a second area in response to addition of the camera 195 of FIG. 18C.

When the first device 195 is added, the vehicle control apparatus 100a according to an embodiment of the present disclosure can recognize a sign in front of a vehicle and the like, and can provide various services based on the recognized sign.

For example, the vehicle control apparatus 100a can set a vehicle speed limit to a first speed based on the first image 1910 while driving in the first area, and can set a vehicle speed limit to a second speed based on the second image 1920 while driving in the second area.

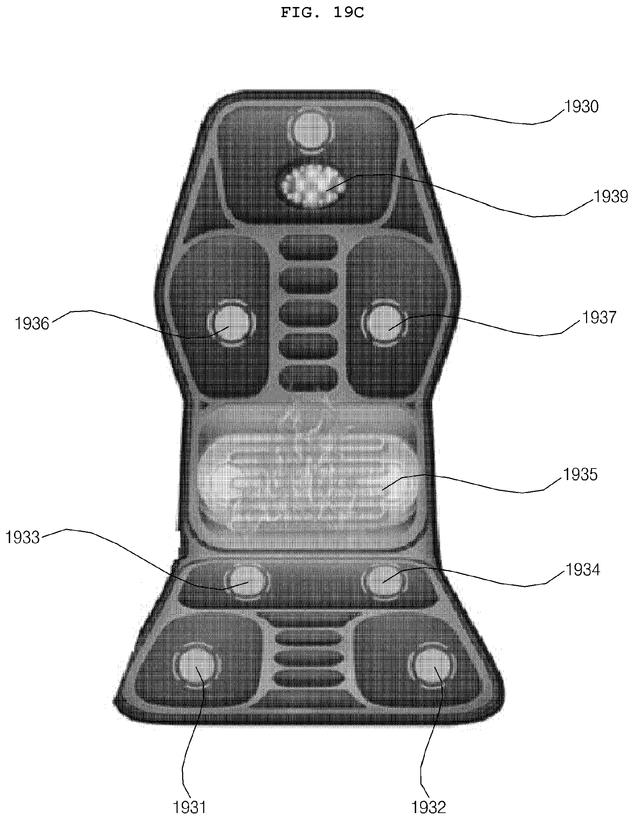

FIG. 19C is a diagram illustrating an example of the appearance of a vehicle seat.

Referring to FIG. 19C, a vehicle seat 1930 can include a plurality of openings 1931 to 1934 and 1936 to 1939 for ventilation or temperature control, and a heater 1935.

The vehicle control apparatus 100a according to an embodiment of the present disclosure can change a temperature setting or wind setting and the like according to the preference of a user sitting in the vehicle seat 1930.

For example, the controller 1230 in the control device 1200 of FIG. 18C can be configured to control the vehicle seat 1930 based on the third vehicle service 1221 executed based on an input signal.

Specifically, the controller 1230 in the control device 1200 can be configured to control the actuators AT1 to ATn for movement of the vehicle seat 1930 based on the third vehicle service 1221 executed based on the input signal.

Meanwhile, when the first device 195 is added, the vehicle control apparatus 100a can be configured to perform a control operation for any one of movement speed, movement control, movement intensity, and automatic movement of the vehicle seat, based on the fifth vehicle service 1223 executed based on the camera data from the vehicle internal camera 195.

Meanwhile, the controller 1230 in the control device 1200 can be configured to control the actuators AT1 to ATn or seat motors HB1 to HBn, as illustrated in FIG. 14A. Accordingly, the fifth vehicle service 1223 can be efficiently executed.

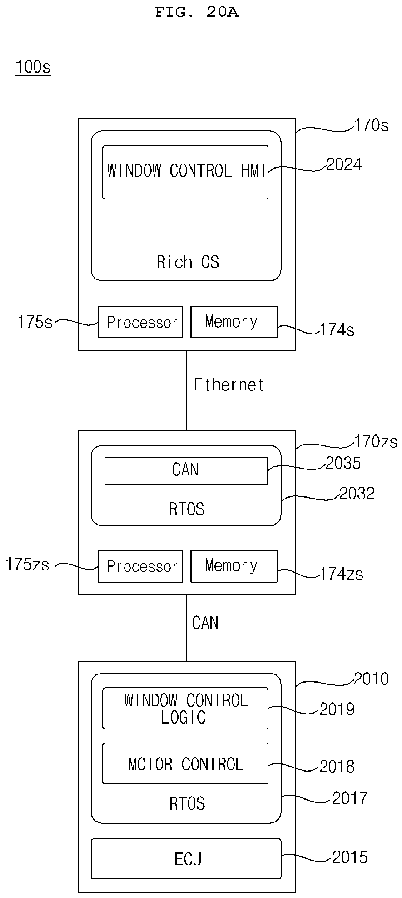

FIG. 20A is a diagram illustrating an example of operating a vehicle control apparatus associated with the present disclosure for window control.

Referring to FIG. 20A, a vehicle control apparatus 100s associated with the present disclosure can include a first signal processing device 170s including a first processor 175s, a second signal processing device 170zs including a second processor 175zs, and a control device 2010 including a controller 2015.

The first signal processing device 170s can be configured to perform Ethernet communication with the second signal processing device 170zs, and the second signal processing device 170zs can be configured to perform CAN communication with the control device 2010.

The first processor 175s can be configured to execute a window control service 2024.

The second processor 175zs can be configured to execute an operating system 2032 and a CAN communication service 2035.

The controller 2015 can be configured to execute an operating system 2017 and execute a window control service 2019 and motor control 2018.

As illustrated in FIG. 20A, when the controller 2015 executes the window control service 2019 and the motor control 2018, it can be difficult to update the window control service 2019.

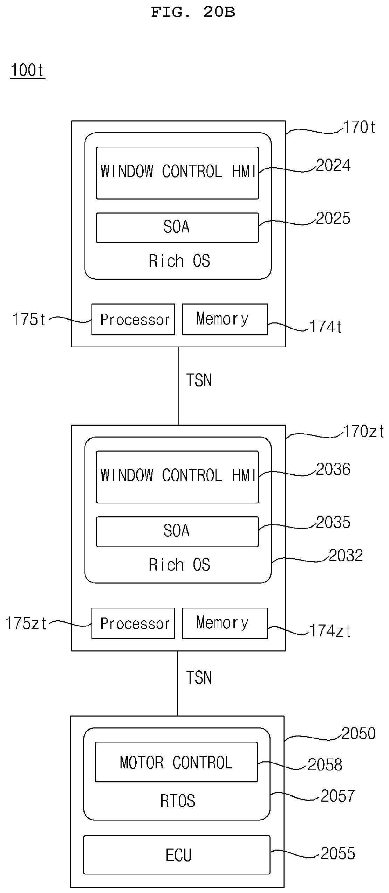

FIG. 20B is a diagram illustrating an example of operating a vehicle control apparatus according to an embodiment of the present disclosure for window control.

Referring to FIG. 20B, a vehicle control apparatus 100t according to an embodiment of the present disclosure can include a first signal processing device 170t including a first processor 175t and a first memory 174t, a second signal processing device 170zt including a second processor 175zt and a second memory 174zt, and a control device 2050 including a controller 2055.

The first signal processing device 170t can be configured to perform TSN communication with the second signal processing device 170zt, and the second signal processing device 170zt can be configured to perform TSN communication with the control device 2050.

The first processor 175t can be configured to execute an operating system, and can be configured to execute a window control service 2024 and an SOA-based service 2025 on the operating system.

The second processor 175zt can be configured to execute an operating system 2032, and can be configured to execute a window control service 2036 and an SOA-based service 2035 on the operating system.

The controller 2055 can be configured to execute an operating system 2057, and can be configured to execute motor control 2058.

As illustrated in FIG. 20B, the controller 2055 executes only the motor control 2058 without executing the window control service 2019, such that the first signal processing device 170t can efficiently update the window control service 2024, or the second signal processing device 170zt can efficiently update the window control service 2036.

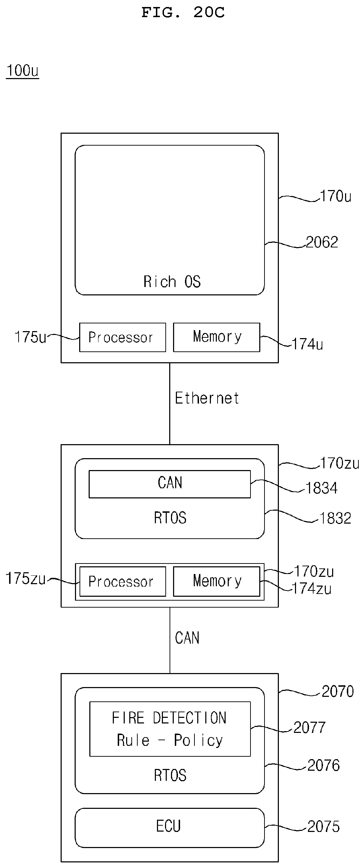

FIG. 20C is a diagram illustrating an example of operating a vehicle control apparatus associated with the present disclosure for fire detection control.

Referring to FIG. 20C, a vehicle control apparatus 100u associated with the present disclosure can include a first signal processing device 170u including a first processor 175u, a second signal processing device 170zu including a second processor 175zu, and a control device 2070 including a controller 2075.

The first signal processing device 170u can be configured to perform Ethernet communication with the second signal processing device 170zu, and the second signal processing device 170zu can be configured to perform CAN communication with the control device 2070.

The first processor 175u can be configured to execute an operating system 2062.

The second processor 175zu can be configured to execute an operating system 1832 and a CAN communication service 1834.

The controller 2075 can be configured to execute an operating system 2076 and execute a fire detection rule 2077.

In FIG. 20C, the fire detection control service is not executed, such that it can be difficult to execute a new or updated fire detection control service.

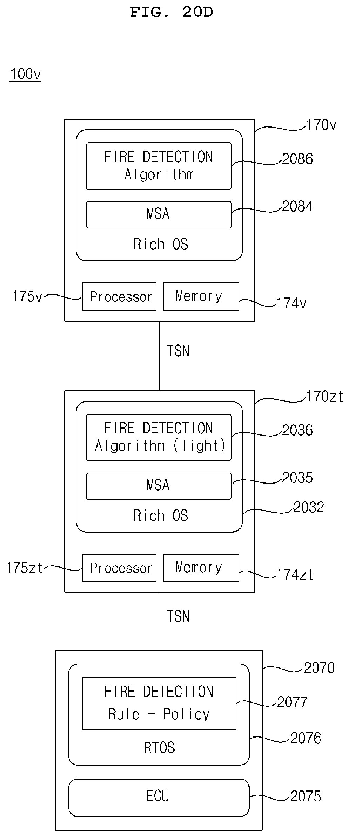

FIG. 20D is a diagram illustrating an example of operating a vehicle control apparatus according to an embodiment of the present disclosure for fire detection control.

Referring to FIG. 20D, a vehicle control apparatus 100v according to an embodiment of the present disclosure can include a first signal processing device 170v including a first processor 175v and a first memory 174v, a second signal processing device 170zv including a second processor 175zv and a second memory 174zv, and a control device 2070 including a controller 2075.

The first signal processing device 170v can be configured to perform TSN communication with the second signal processing device 170zv, and the second signal processing device 170zv can be configured to perform TSN communication with the control device 2070.

The first processor 175v can be configured to execute an operating system, and can be configured to execute a fire detection control service 2086 and a microservice 2084 on the operating system.

The second processor 175zv can be configured to execute an operating system 2032, and can be configured to execute the fire detection control service 2036 and a microservice 2035 on the operating system.

The controller 2075 can be configured to execute an operating system 2076, and can be configured to execute a fire detection rule 2077.

As illustrated in FIG. 20D, the controller 2075 executes only the fire detection rule 2077, but the first signal processing device 170v and the second signal processing device 170zv execute the fire detection control service 2086 and the fire detection control service 2036, respectively, such that update and the like can be efficiently performed.

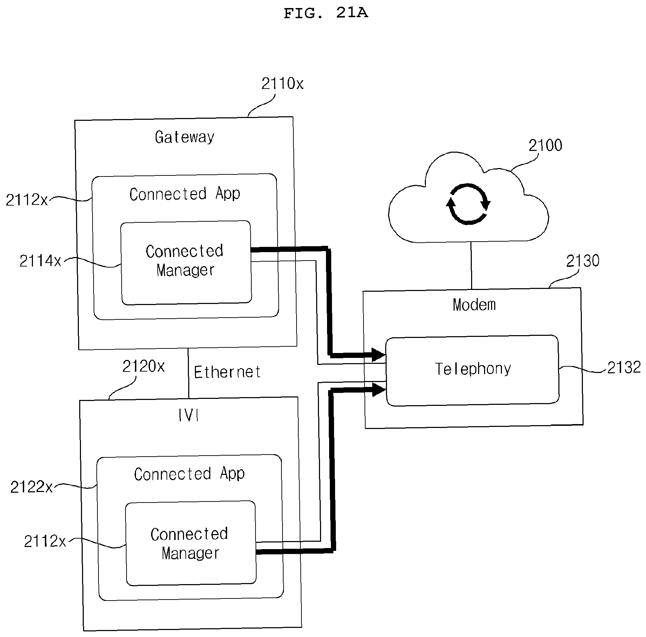

FIG. 21A is a diagram illustrating an example of operating a vehicle control apparatus associated with the present disclosure.

Referring to FIG. 21A, a vehicle control apparatus 100x associated with the present disclosure can include a first signal processing device 2110x configured to operate as a gateway, a second signal processing device 2120x configured to operate for a display, and a communication device 2130 configured to exchange data with a server 2100.

The first signal processing device 2110x can be configured to execute a connected application 2112x including a connected manager 2114x.

Meanwhile, the second signal processing device 2120x can be configured to execute a connected application 2122x including a connected manager 2112x, separately from the first signal processing device 2110x.

Each of the signal processing devices 2110x and 2120x can separately execute the applications 2112x and 2122x, respectively, and each of the applications 2112x and 2122x exchanges data with the server 2100 via a communication service 2132 in the communication device 2130.

The structure of the vehicle control apparatus 100x associated with the present disclosure in FIG. 21A can be referred to as a monolithic architecture, and the structure has a drawback in that data transmission is inefficient and update is difficult.

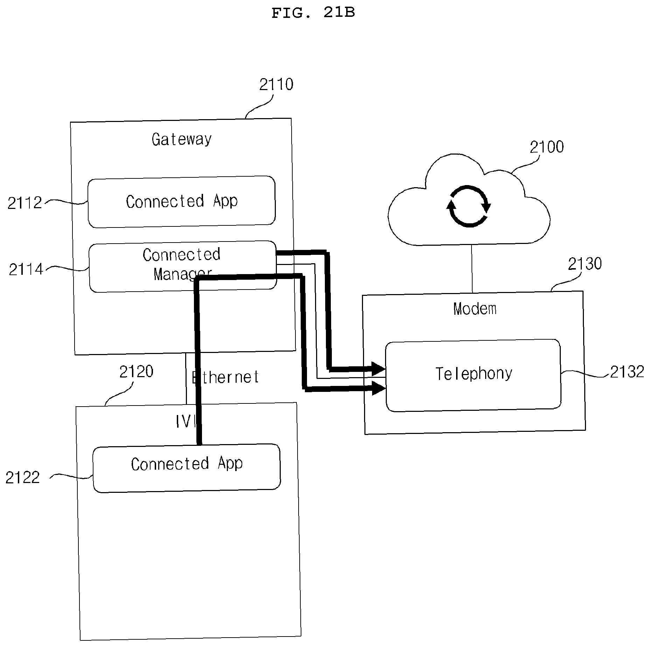

FIG. 21B is a diagram illustrating an example of operating a vehicle control apparatus according to an embodiment of the present disclosure for fire detection control.

Referring to FIG. 21B, a vehicle control apparatus 100 according to an embodiment of the present disclosure can include a first signal processing device 2110 configured to operate as a gateway, a second signal processing device 2120 configured to operate for a display, and a communication device 2130 configured to exchange data with a server 2100.

The first signal processing device 2110 can separately execute a connected manager 2114 and a connected application 2112.

Meanwhile, the second signal processing device 2120 can be configured to execute a connected application 2122 without executing a connected manager.

In this case, the connected application 2122 in the second signal processing device 2120 can be connected to the communication device 2130 via the connected manager 2115 in the first signal processing device 2110.

As a result, each of the signal processing devices 2110 and 2120 can separately execute the applications 2112 and 2122, respectively, and can use in common the connected manager 2114 in the first signal processing device 2110, and can exchange data with the server 2100 via the communication service 2132 in the communication device 2130.

The structure of the vehicle control apparatus 100 according to an embodiment of the present disclosure in FIG. 21B can be referred to as a Service Oriented Architecture.

In this structure, data transmission and the like can be efficiently performed, and particularly, update can be efficiently executed.

As described above, a signal processing device and a vehicle control device including the same according to an embodiment of the present disclosure includes: a first signal processing device including a first processor and a first memory; a second signal processing device electrically connected to the first signal processing device and including a second processor and a second memory; and a control device including a controller electrically connected to the second signal processing device and configured to control a plurality of actuators, wherein the second processor is configured to: execute a first service to control the controller to output a turn-on signal or a turn-off signal to at least one of the plurality of actuators; in response to a second service being executed after data associated with execution of the second service, which is added or updated in addition to the first service, is stored in the first memory or the second memory, control the controller to output the turn-on signal or the turn-off signal, or an operation control signal to at least one of the plurality of actuators; and not transmit the data associated with the execution of the second service to the control device. Accordingly, a new service or an updated service can be efficiently executed. Particularly, an SOA-based new service or updated service can be efficiently executed.

Meanwhile, in response to condition data in the data associated with the execution of the second service being satisfied, the second processor can be configured to execute the second service. Accordingly, a new service or an updated service can be efficiently executed.

Meanwhile, the operation control signal can include an operation speed control signal, an operation intensity control signal, or an operation temperature control signal. Accordingly, a new service or an updated service can be efficiently executed

Meanwhile, the second service can include a microservice. Accordingly, a new service or an updated service can be efficiently executed.

Meanwhile, the first processor can be configured to execute a third service based on received sensor data and to transmit information associated with the execution of the third service to the second processor, wherein the second processor can be configured to control the controller by executing the second service based on the information associated with the execution of the third service. Accordingly, a new service or an updated service can be efficiently executed.

Meanwhile, the first processor can be configured to execute a third service based on a received first input signal and sensor data and to transmit information associated with the execution of the third service to the second processor, wherein the second processor can be configured to control the controller by executing the second service based on the information associated with the execution of the third service. Accordingly, a new service or an updated service can be efficiently executed.

Meanwhile, the sensor data can include at least one of vehicle driving sensor data, occupant status sensor data, and vehicle surrounding sensor data. Accordingly, a new service or an updated service can be efficiently executed based on the sensor data.

Meanwhile, in response to the sensor data satisfying a condition for executing the third service, the first processor can be configured to execute the third service. Accordingly, a new service or an updated service can be efficiently executed based on the sensor data.

Meanwhile, the first processor can be configured to transmit a received first input signal to the second processor, wherein the second processor can be configured to control the controller by executing the first service based on the first input signal. Accordingly, the first service can be efficiently executed.

Meanwhile, the second processor can be configured to control the controller by executing the second service based on the received sensor data. Accordingly, the second service can be efficiently executed.

Meanwhile, the second processor can be configured to control the controller by executing the second service based on the received first input signal and sensor data. Accordingly, the second service can be efficiently executed.

Meanwhile, the sensor data can include at least one of vehicle driving sensor data, occupant status sensor data, and vehicle surrounding sensor data. Accordingly, a new service or an updated service can be efficiently executed based on the sensor data.

Meanwhile, in response to the sensor data satisfying a condition for executing the second service, the second processor can be configured to execute the second service. Accordingly, a new service or an updated service can be efficiently executed based on the sensor data.

Meanwhile, the second processor can be configured to control the controller by executing the first service based on the first input signal. Accordingly, the first service can be efficiently executed.

Meanwhile, the data associated with the execution of the second service can include condition data and action data, wherein at least one of the condition data and the action data can be updatable. Accordingly, a new service or an updated service can be efficiently executed.

Meanwhile, the condition data can include vehicle driving sensor data, occupant status sensor data, and vehicle surrounding sensor data. Accordingly, a new service or an updated service can be efficiently executed based on the condition data.

Meanwhile, when the second processor executes the second service, the controller can be configured to receive operation status data of the actuators and to change operation status of the actuators based on the operation status data of the actuators. Accordingly, the second service can be efficiently executed.

Meanwhile, the controller can be configured to control turning on or off of the actuators based on the first service, and to change operation speed of the actuators based on the second service. Accordingly, the second service can be efficiently executed.

Meanwhile, the controller can be configured to control the actuators for locking or unlocking a vehicle window based on the first vehicle service executed based on an input signal, and can be configured to control the actuators or windows for any one of window closing speed, window opening control, window closing strength, and automatic window locking based on the second service executed by vehicle internal camera data. Accordingly, the second service can be efficiently executed.

Meanwhile, the controller can be configured to control the actuators for movement of a vehicle seat based on the first vehicle service executed based on an input signal, and can be configured to control the actuators or a seat motor for any one of movement speed, movement control, movement intensity, and automatic movement of the vehicle seat based on the second service executed by vehicle internal camera data. Accordingly, the second service can be efficiently executed.

Meanwhile, the controller can be configured to control the actuators for temperature control in a vehicle based on the first vehicle service executed based on an input signal, and can be configured to control the actuators for any one of temperature control, wind direction control, and fan speed in the vehicle based on the second service executed by vehicle internal camera data. Accordingly, the second service can be efficiently executed.

Meanwhile, the vehicle control apparatus can further include: a third signal processing device electrically connected to the first signal processing device and including a third processor and a third memory; and a second control device including a second controller electrically connected to the third signal processing device and configured to control a plurality of actuators. Accordingly, a new service or an updated service can be efficiently executed by using the second control device.

Meanwhile, the third processor can be configured to: execute a fourth service to control a second controller to output a second turn-on signal or a second turn-off signal to at least one of the plurality of actuators; in response to a fifth service being executed after data associated with execution of the fifth service, which is added or updated in addition to the fourth service, is stored in the third memory, control the second controller to output the second turn-on signal or the second turn-off signal, or a second operation control signal to at least one of the plurality of actuators; and not transmit the data associated with the execution of the fifth service to the second control device. Accordingly, a new service or an updated service can be efficiently executed by using the second controller.

Meanwhile, in response to a first device being newly connected to the second signal processing device or the control device, the first processor can be configured to receive data for executing a service corresponding to the first device from an external server or an external electronic device and to execute the service. Accordingly, a new service or an updated service corresponding to the first device can be efficiently executed.

## Claims

1. A vehicle control apparatus (100) comprising:
a first signal processing device (170) including a first processor (175) and a first memory (174);
a second signal processing device (170z) electrically connected to the first signal processing device (170) and including a second processor (175z) and a second memory (174z); and
a control device (1200) including a controller (1230) electrically connected to the second signal processing device (170z) and configured to control a plurality of actuators,
wherein the second processor (175z) is configured to:
execute a first service to control the controller (1230) to output a turn-on signal or a turn-off signal to at least one of the plurality of actuators;
in response to a second service being executed after data associated with execution of the second service, which is added or updated in addition to the first service, is stored in the first memory or the second memory, control the controller (1230) to output the turn-on signal or the turn-off signal, or an operation control signal to at least one of the plurality of actuators; and
not transmit the data associated with the execution of the second service to the control device (1200).

2. The vehicle control apparatus of claim 1, wherein in response to a condition corresponding to or defined by particular data among the data associated with the execution of the second service being satisfied, the second processor (175z) is configured to execute the second service.

3. The vehicle control apparatus of claim 1 or 2, wherein the first processor (175) is configured to execute a third service based on received sensor data, and to transmit information associated with the execution of the third service to the second processor (175z),
wherein the second processor (175z) is configured to control the controller (1230) by executing the second service based on the information associated with the execution of the third service.

4. The vehicle control apparatus of claim 3, wherein in response to the sensor data satisfying a condition for executing the third service, the first processor (175) is configured to execute the third service.

5. The vehicle control apparatus of claim 3 or 4, wherein the first processor (175) is configured to transmit a received first input signal to the second processor (175z),
wherein the second processor (175z) is configured to control the controller by executing the first service based on the first input signal.

6. The vehicle control apparatus of any one of claims 3 to 5, wherein the second processor (175z) is configured to control the controller by executing the second service based on the received sensor data.

7. The vehicle control apparatus of claim 5, wherein the second processor (175z) is configured to control the controller by executing the first service based on the first input signal.

8. The vehicle control apparatus of any one of claims 1 to 7, wherein the data associated with the execution of the second service comprises condition data and action data,
wherein at least one of the condition data and the action data is updatable.

9. The vehicle control apparatus of any one of claims 1 to 8, wherein when the second processor (175z) executes the second service, the controller (1230) is configured to receive operation status data of the actuators and to change operation status of the actuators based on the operation status data of the actuators.

10. The vehicle control apparatus of any one of claims 1 to 8, wherein the controller (1230) is configured to control turning on or off of the actuators based on the first service, and to change operation speed of the actuators based on the second service.

11. The vehicle control apparatus of any one of claims 1 to 8, wherein the controller (1230) is configured to control the actuators for locking or unlocking a vehicle window based on the first vehicle service executed based on an input signal, and to control the actuators or windows for any one of window closing speed, window opening control, window closing strength, and automatic window locking based on the second service executed by vehicle internal camera data.

12. The vehicle control apparatus of any one of claims 1 to 11, wherein the controller (1230) is configured to control the actuators for movement of a vehicle seat based on the first vehicle service executed based on an input signal, and to control the actuators or a seat motor for any one of movement speed, movement control, movement intensity, and automatic movement of the vehicle seat based on the second service executed by vehicle internal camera data.

13. The vehicle control apparatus of any one of claims 1 to 8, wherein the controller (1230) is configured to control the actuators for temperature control in a vehicle based on the first vehicle service executed based on an input signal, and to control the actuators for any one of temperature control, wind direction control, and fan speed in the vehicle based on the second service executed by vehicle internal camera data.

14. The vehicle control apparatus of any one of claims 1 to 13, further comprising:
a third signal processing device (170z2) electrically connected to the first signal processing device (170) and including a third processor (175z2) and a third memory (174z2); and
a second control device (1300) including a second controller (1247) electrically connected to the third signal processing device and configured to control a plurality of actuators,
wherein the third processor (175z2) is configured to:
execute a fourth service to control a second controller (1247) to output a second turn-on signal or a second turn-off signal to at least one of the plurality of actuators;
in response to a fifth service being executed after data associated with execution of the fifth service, which is added or updated in addition to the fourth service, is stored in the third memory, control the second controller (1247) to output the second turn-on signal or the second turn-off signal, or a second operation control signal to at least one of the plurality of actuators; and
not transmit the data associated with the execution of the fifth service to the second control device.

15. The vehicle control apparatus of any one of claims 1 to 14, wherein in response to a first device being newly connected to the second signal processing device or the control device, the first processor (175) is configured to receive data for executing a service corresponding to the first device from an external server or an external electronic device and to execute the service.
